(19) Europäisches Patentamt
European Patent Office
Office européen des brevets

(11) **EP 2 522 508 A2**

(12) **EUROPEAN PATENT APPLICATION**

(43) Date of publication:
**14.11.2012 Bulletin 2012/46**

(21) Application number: **12167674.6**

(22) Date of filing: **11.05.2012**

(51) Int Cl.:
***B41C 1/04*** *(2006.01)* ***B41N 1/06*** *(2006.01)*
***B41N 1/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.05.2011 US 201161485485 P**

(71) Applicant: **E. I. du Pont de Nemours and Company**
**Wilmington, DE 19898 (US)**

(72) Inventors:
- **Adelman, Douglas, J.**
**Wilmington, DE Delaware 19810 (US)**
- **Figuly, Garret, D.**
**Wilmington, DE Delaware 19808 (US)**
- **Lu, Helen, Shin Min**
**Wallingford, PA Pennsylvania 19086 (US)**
- **Sharma, Usha**
**Newark, DE Delaware 19711 (US)**

(74) Representative: **de Bresser, Sara Jean**
**Dehns**
**St Bride's House**
**10 Salisbury Square**
**London EC4Y 8JD (GB)**

(54) **Printing form and process for preparing the printing form with curable composition having bisphenol-based epoxy resin**

(57) The invention pertains to a process for preparing a printing form from a curable composition that includes an bisphenol-based epoxy resin; an amine curing agent selected from primary amines and secondary amines, the agent having an amine equivalent weight of less than or equal to 200 g/equivalent; and, a multi-epoxy reactive diluent. The process includes applying the curable composition to a supporting substrate to form a layer, curing the layer at one or more temperatures in a temperature range, and engraving to form at least one cell in the cured layer. The process prepares printing forms, particularly gravure printing forms, having a cured resin composition layer that is engravable, resistant to solvent inks and to mechanical wear, and capable of printing gravure-quality images.

EP 2 522 508 A2

**Description**

BACKGROUND OF THE INVENTION

1. Field of the Invention

This invention pertains to a printing form and a process for preparing the printing form, and in particular a process for preparing a gravure printing form in which the one or more of the conventional metal layers are replaced by bisphenol-based epoxy resins.

2. Description of Related Art

Gravure printing is a method of printing in which the printing form prints from an image area, where the image area is depressed and consists of small recessed cups or wells to contain the ink or printing material, and the non-image area is the surface of the form. A gravure cylinder, for example, is essentially made by electroplating a copper layer onto a base roller, and then engraving the image composed of the small recessed cells or wells digitally by a diamond stylus or laser etching machine. The cylinder with engraved cells is then overplated with a very thin layer of chrome to impart durability during the printing process. Consequently, gravure printing forms are expensive and require considerable time and material to produce.

Replacing the electroplated copper and chrome layers with a polymer-based composition has been explored, for example, by Bressler et al. (U.S. Patent No. 5,694,852), Campbell and Belser (U.S. Patent Publication 2004/0221756), and Kellner and Sahl (UK Patent Application GB 2,071,574). However, a combination of several process and property requirements must be met for this approach to succeed. For an economical process, a polymer-based coating needs to be applied to the cylinder easily ("coatability") and cured reasonably rapidly ("curability"), allowing a high-quality surface layer to be produced to the strict tolerances required for gravure engraving and printing with a minimal requirement for grinding and polishing. The surface layer needs to have a level of hardness that produces well defined print cell structure when engraved, without significant chipping or breaking ("engravability"). The surface layer also needs to possess excellent resistance to the solvents used in gravure printing inks and cleaning solutions ("durability- solvent resistance"). Also, the surface layer needs to resist the mechanical wear ("durability- mechanical wear") encountered during the printing process, e.g., wear from the scraping of the doctor blade, wear from any abrasive particles that may be in the ink, and wear from the surface onto which the image is printed. Further, in order for gravure printing forms having a polymer-based composition to replace conventional metal-covered gravure printing forms, the polymer-based printing forms should be capable of relatively long print runs and provide a consistent printed image for a minimum of 200,000 impressions.

As a consequence, there remains a need to identify specific compositions that can be used to produce, in an economical and environmentally friendly manner, a gravure printing form surface layer that exhibits the necessary combination of engravability, solvent resistance, mechanical wear resistance, and print quality.

SUMMARY OF THE INVENTION

The present invention provides a process for preparing a printing form comprising a) providing a curable composition comprising i) a bisphenol-based epoxy resin; ii) an amine curing agent selected from primary amines and secondary amines, the agent having an amine equivalent weight of less than or equal to 200 g/equivalent; and iii) at least one multi-epoxy reactive diluent, which is present at 0.5 to 40 wt% based on the combined weight of the components of the curable composition, and has an epoxide equivalent weight between 55 and 400. The process includes b) applying the curable composition onto a supporting substrate, thereby forming a layer; c) curing the layer at one or more temperatures in a range of room temperature to about 250°C; and d) engraving at least one cell into the layer resulting from step c).

In accordance with another aspect of this invention there is provided a process for printing with a printing form comprising: a) preparing the printing form having a cured layer according to the above described process; b) applying a solvent ink to the at least one cell; and c) transferring ink from the cell to a printable substrate, wherein the cured layer swells ≤ 10% based on weight of the layer.

In accordance with another aspect of this invention there is provided a printing form comprising a continuous print surface adjacent a supporting substrate, wherein the continuous print surface is a cured epoxy composition prepared from a curable composition comprising: i) a bisphenol-based epoxy resin; ii) an amine curing agent selected from primary amines and secondary amines, the agent having an amine equivalent weight of less than or equal to 200 g/equiv; and iii) a multi-epoxy reactive diluent, wherein the multi-epoxy reactive diluent is present at 0.5 to 40 wt% based on the combined weight of the components of the curable composition, and has an epoxide equivalent weight between 55 and 400.

DETAILED DESCRIPTION OF THE PREFERRED EMBODIMENTS

In the context of this disclosure, a number of terms shall be utilized:

The term "bisphenol-based epoxy resin" means an epoxy resin created by the reaction of a bisphenol and epichlorohydrin.

The term "gravure printing" means a process in which an image is created by engraving or etching one or more depressions in the surface of a printing form, the engraved or etched area is filled with ink, then the printing form transfers the ink image to a substrate, such as paper or another material. An individual etched depression is referred to as a "cell."

The term "printing form" means an object (e.g., in the form of a cylinder, block, or plate) used in to apply ink onto a surface for printing.

The term "room temperature" or, equivalently "ambient temperature," has its ordinary meaning as known to those skilled in the art and may include temperatures within the range of about 16°C (60°F) to about 32°C (90°F).

The term "primary amine" means any of a class of organic compounds containing $-NH_2$ functional groups.

The term "secondary amine" means any of a class of organic compounds containing -NH- functional groups.

The term "solvent ink" means an ink that includes an organic solvent, typically the organic solvent is volatile, in contrast to water-based inks.

The term "curing" refers to hardening of a polymer material by cross-linking of polymer chains, brought about by chemical additives, heat, ultraviolet radiation, or electron beam. Hardening occurs primarily by crosslinking of the polymer chains. But other interactions in the polymer material or resin, such as branching and linear chain extension, may also occur in relatively small degree compared to crosslinking of the polymer chains.

The term "curable composition" as used herein refers to the composition that is applied to a substrate and then cured. The curable composition contains at least a curable polymer material of a bisphenol-based epoxy resin, an amine curing agent, and at least one multi-epoxy reactive diluent, and can include one or more additional components, for example, monofunctional epoxy-reactive diluents, catalysts, fillers, nanoparticles, flexibilizing components, resin modifiers, pigments, solvents ,and/or other additives.

The term "cured composition" as used herein refers to the composition that remains on the substrate after being applied and cured. The cured composition contains at least a curable polymer material or resin and an amine curing agent, and at least one multi-epoxy reactive diluent, and can include additional components, for example, catalysts, reactive diluents, fillers, nanoparticles, flexibilizing components, resin modifiers, pigments, and/or other additives, and solvent (although the solvent is typically driven out during applying and/or curing). The cured composition may also be considered a cured layer, or engravable layer. In some instances the cured composition may be referred to as a cured layer of the curable composition.

The term "amine equivalent weight" means the molecular weight of the amine-group-containing molecule divided by the number of amine hydrogens in the molecule. For example: triethylenetetramine ("TETA") has a molecular weight of 146 and 6 amine hydrogens, so its amine equivalent weight is 146/6 = 24 g/equiv.

The term "epoxide equivalent weight" (EEW) means the weight in grams that contains 1 gram equivalent of epoxide.

The term "epoxide" means an organic compound containing a reactive group that is an "epoxide group", and the term "epoxide group" means a group that results from the union of oxygen with two carbons that are joined as indicated

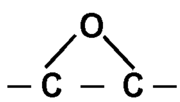

The term "nanoparticle" means a particle having at least one dimension less than about 500 nm.

The term "molecular weight" is the weighted average molecular weight, unless described otherwise in the specification.

Unless otherwise indicated herein, weight percent (wt%) of a component is based on the combined weight of the components, excluding solvents, of the curable composition.

The present invention is a process for preparing a printing form from a curable composition, and particularly a process for preparing a gravure printing form from a curable composition. The curable composition includes a bisphenol-based epoxy resin; an amine curing agent having a particular amine equivalent weight; and, at least one multi-epoxy reactive diluent. In particular, the curable composition includes i) a bisphenol-based epoxy resin; ii) an amine curing agent selected from primary amines and secondary amines, the agent having an amine equivalent weight of less than 200 g/equivalent and, iii) at least one multi-epoxy reactive diluent which is present at about 0.5 to 40 wt% based on the

combined weight of the components of the curable composition, and has an epoxide equivalent weight between 55 and 400. In some embodiments, the combined weight of the components of the curable composition is based on components i), ii) and iii). In other embodiments, the combined weight of the components of the curable composition is based upon components i), ii) and iii) and one or more other optional components of the curable composition.

The claimed process facilitates the preparation of a printing form in considerably less time, at reduced cost, and in a more environmentally-sound manner than conventional printing forms having one or more metal layers for gravure printing. Surprisingly and unexpectedly, the claimed process prepares a printing form from the particular curable composition containing the bisphenol-based epoxy resin, the amine curing agent having a specific amine equivalent weight, and a multifunctional epoxy-reactive diluent that is capable of meeting several of the property requirements for successful performance comparable to conventional gravure printing forms.

The present printing form prepared with a curable composition containing the bisphenol-based epoxy resin, the amine curing agent having an amine equivalent weight of less than or equal to 200 g/equivalent, and at least one multi-epoxy reactive diluent having a epoxide equivalent weight between 55 and 400 and is present at about 0.5 to about 40 wt% based on the combined weight of the components exhibits the necessary combination of engravability, solvent resistance, mechanical wear resistance, and print quality. The particular curable composition has good coatability as the composition can be applied easily to form a layer on a supporting substrate that is relatively uniform and needs only minimal grinding or polishing. The particular curable composition has good curability as the composition can be cured reasonably rapidly in less than 6 hours, and in most embodiments in less than 4 hours. Good coatability and curability allow a high quality coating of the epoxy resin to be produced within strict tolerances needed for gravure engraving and printing with minimal after treatments. The claimed process also has advantages over conventional metal-plating processes for gravure printing cylinders in the economies of time and cost since the high quality coating and curing can be rapidly accomplished with less expensive materials. After curing the layer of the particular curable composition, the layer provides the desired balance between engravability and mechanical wear resistance. The cured layer exhibits a level of hardness that produces well-defined print cell structures when engraved yet resists wear during printing from contact with the doctor blade and the printed substrate, and abrasive particles that may be in the ink. The cured layer of the particular composition can be engraved to have cell density at resolution at least up to 200 lines per inch, with minimal or no break out of wall between adjacent cells. And yet, the cured layer of the particular composition is capable of printing for relatively long print runs, i.e., at least 200,000 impressions and preferably more, with wear reduction of the cell area of no more than 10%, and in most embodiments wear of less than 5%. Furthermore, the cured layer of the particular composition has excellent resistance to solvents used in printing inks and cleaning solutions, such that high quality printing can be maintained for the relatively long print runs. Since the present printing form having a cured layer of the present curable composition exhibits the necessary combination of characteristics necessary to perform gravure printing, the present printing form which also forms part of this invention provides significant advance over other non-metal resin-based gravure printing forms of the prior art.

Various bisphenol-based epoxy resins may be used for the present invention. In particular, in one embodiment the bisphenol-based epoxy resin is an intermediate molecule based on the reaction of epichlorohydrin and bisphenol A ("BPA") and/or bisphenol F ("BPF"). Bisphenol-based epoxy resins that are useful for the present invention include, but are not limited to, bisphenol A diglycidyl ether, ("BPADGE") and its oligomers,

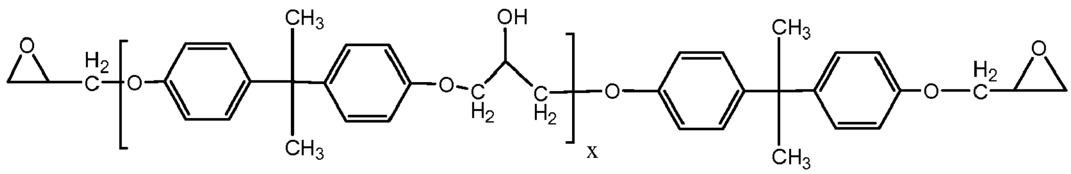

and bisphenol F diglycidyl ether, ("BPFDGE") and its oligomers,

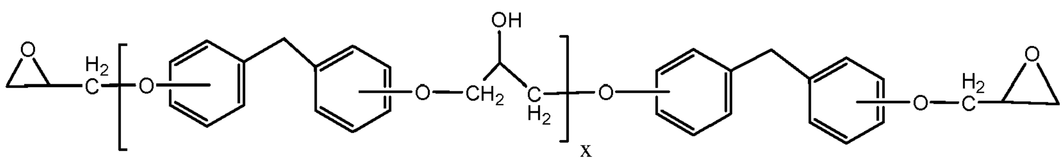

where x can be 0 to about 16 for their oligomers. For the monomer of BPADGE, i.e., bisphenol A diglycidyl ether (DGEBPA), and the monomer of BPFDGE, i.e., bisphenol F diglycidyl ether (DGEBFA), x is 0. Molecular weight of oligomers of BPADGE and BPFDGE can be up to approximately 6000 g/mol.

The bisphenol-based epoxy resin has a molecular weight in the range of about 298 to about 6000 g/mol. In one embodiment, the bisphenol-based epoxy resin based on bisphenol A has a molecular weight in the range of about 340 to about 6000 g/mol. In one embodiment, the bisphenol-based epoxy resin based on bisphenol F has a molecular weight in the range of about 310 to about 6000 g/mol. In some embodiments, the bisphenol-based epoxy resins have a molecular weight between and optionally including any two of the following values: 298, 300, 310, 340, 400, 600, 800, 1000, 1200, 1500, 1800, 2100, 2400, 2700, 3000, 3300, 3600, 3900, 4200, 4500, 4800, 5100, 5400, and 6000. Since the bisphenol-based epoxy resins have 2 epoxy groups per oligomer, the bisphenol-based epoxy resins have an epoxide equivalent weight (EEW) that is generally about half of the molecular weight of the oligomer. In one embodiment, the bisphenol-based epoxy resin is present from about 40 to about 95 wt%, based on the combined weight of the bisphenol-based epoxy resin, amine curing agent, and multi-epoxy reactive diluent. In another embodiment, the bisphenol-based epoxy resin is present from about 40 to about 95 wt%, based on the combined weight of the components in the curable composition. In some embodiments, the bisphenol-based epoxy resin is present in an amount between and optionally including any two of the following values: 40, 45, 50, 55, 60, 65, 70, 75, 80, 85, 90, and 95 wt%, based on the combined weight of the components in the curable composition.

Examples of commercially available bisphenol A diglycidyl ether epoxy resins are Insulcast 503/504 BLK; Insulcast 504 Clear; Insulcast 125; Insulcast 333; Insulcast 136; and Insulcast 502, available (from ITW Polymer Technologies (Glenview, Illinois, U.S.A.); Epon 828, and Epon 826 available from Hexion Specialty Chemicals, Inc., now Momentive Specialty Chemicals, Inc., part of Momentive Performance Materials Holdings, Inc., (Columbus, Ohio, U.S.A.). Examples of commercially available bisphenol F diglycidyl ether epoxy resins are Araldite® GY285, Araldite® GY281, and Araldite® PY302-2 from Huntsman International, LLC (Salt Lake City, Utah, USA). Mixtures of bisphenol-based epoxy resins can be used in the curable composition.

The curable composition can include a combination of epoxy resins. In one embodiment, the curable composition contains a combination of more than one bisphenol-based resin. In some embodiments, the curable composition contains a combination of one or more bisphenol A -based epoxy resins with one or more other bisphenol-based epoxy resins. In some embodiments, the curable composition contains a combination of one or more bisphenol F -based epoxy resins with one or more other bisphenol-based epoxy resins. In some embodiments, when combined with one or more other bisphenol-based epoxy resins in the curable composition, the bisphenol A and/or bisphenol F -based epoxy resins are present in at least 50 wt% based on the combined weight of all the epoxies present.

In yet other embodiments, the curable composition contains a combination of one or more of the bisphenol-based epoxy resins with one or more other epoxy resin. The at least one other epoxy resin includes, but is not limited to, epoxy novolac resins, and epoxy cresol novolac resins. Examples of suitable epoxy novolac resins are D.E.N.™ 431, D.E.N.™ 438, D.E.N.™ 439 (all available from the Dow Chemical Company, Midland Michigan, USA) and EPON™ Resin 160 and EPON™ Resin SU-2.5 (available from Momentive Specialty Chemicals, Inc., formerly Hexion Specialty Chemicals, part of Momentive Performance Materials Holdings, Inc., Columbus, Ohio, USA). When combined with at least one other epoxy resin in the curable composition, the bisphenol-based epoxy resins are present in at least 50 wt% based on the combined weight of all the epoxies present.

Curing agents used in the processes described herein are primary amines and secondary amines, and thus are referred to herein as amine curing agents. Amine curing agents are primarily suitable for the present process because they increase the cure speed of the curable composition compared to other possible curing agents such as acids and/or anhydrides, and are capable of curing the composition at moderate temperatures, e.g., room temperature to about 150°C. Amine curing agents are characterized by an amine equivalent weight (AEW) of less than or equal to about 200 g/equivalent. In one embodiment, the amine equivalent weight is about 20 to about 200 g/equivalent. In an embodiment, the amine equivalent weight is between and optionally including any two of the following values: 20, 30, 40, 50, 60, 70, 80, 90, 100, 110, 120, 130, 140, 150, 160, 170, 180, 190 and 200 g/equivalent. In most embodiments the amine curing agent has 1.5 or more amino functionalities per molecule.

The amine curing agents can be aliphatic amines (e.g., triethylenetetramine, diethylenetriamine, tetraethylenepentamine, tris-2-aminoethylamine); aliphatic polyamines; modified aliphatic polyamines; cycloaliphatic amines (e.g., isophorone diamine; 1,2-diaminocyclohexane; 1-(2-aminoethyl)piperazine, bis(4-aminocyclohexyl)methane; 2,2'-dimethyl-4,4'-methylenebis(cyclohexylamine)); modified cycloaliphatic amines; aromatic amines (e.g., m-phenylene-diamine; p-phenylene-diamine; 4,4'-diaminodiphenylmethane; 4,4'-diaminodiphenyl sulfone; diethyltoluenediamine); arylyl amines, which have cycloaliphatic or aromatic moieties from which the amine functional groups are separated by methylene groups $-CH_2-$ (e.g., m-xylylene diamine and 1,3-bis(aminomethyl cyclohexane)), or polymeric amines (e.g. 1,2-ethanediamine, N,N'-bis(2-aminoethyl)- polymer with methyloxirane, modified polyethylene-polyamine adducts). Epoxy curing agents are described in Epoxy Resins Chemistry and Technology, Clayton A. May editor, 2nd edition, Marcel Dekker, In., N.Y.. An extensive list of commercial amine curing agents is also given in Table 15 on p. 730 of "Epoxy Resins," by Ha. Q. Pham and Maurice J. Marks in Encyclopedia of Polymer Science and Technology, 4th ed., Jacqueline I. Kroschwitz, exec. ed., John Wiley & Sons, Hoboken, NJ, 2004, pp. 678-804. Mixtures of amines can also be used. In some embodiments, the amine curing agent is triethylenetetramine, diethylenetriamine, or a cycloaliphatic amine. In

most embodiments, the ratio of epoxy functionality to the amine functionality is from about 0.8:1.2 to about 1.2:0.8, on a mole-to-mole basis. In one embodiment, the amine curing agent is present from about 5 to about 28 wt%, based on the combined weight of bisphenol-based epoxy resin, amine curing agent, and multi-reactive epoxy diluent. In another embodiment, the amine curing agent is present from about 5 to about 28 wt%, based on the combined weight of the components in the curable composition. In some embodiments, the amine curing agent is present in an amount between and optionally including any two of the following values: 5, 8, 10, 15, 20, 25, and 28 % by weight, based on the combined weight of the components of the curable composition.

The bisphenol-based epoxy can be cured in the presence of the curing agent and a catalyst. Catalytic polymerizations of epoxy occur with a variety of Lewis bases and acids as well as salts and metal complexes. Epoxy curing reactions are described in Epoxy Resins Chemistry and Technology, Clayton A. May editor, 2nd edition, Marcel Dekker, Inc, NY. Suitable catalysts include, but are not limited to, imidazoles, 2-ethyl-4-methyl imidazole, 2,4,6-tris(dimethylaminomethyl)phenol, and nonyl phenol. The catalyst can be present in the curable composition from about 0 to about 10% by weight, based on the combined weight of the components in the curable composition. In some embodiments, the catalyst is present in an amount between and optionally including any two of the following values: 0, 1, 2, 3, 4, 5, 6, 7, 8, 9, and 10 wt%, based on the combined weight of the components in the curable composition.

The curable composition used in the processes described herein contains at least one multifunctional epoxy-reactive diluent, and may be referred to herein as multi-epoxy reactive diluent, or reactive diluent. Multi-epoxy reactive diluents are epoxy compounds having more than one epoxide group, and thus are multi-functional reactive diluents that encompass tri-functional (i.e, having three epoxide groups) and tetrafunctional (i.e., having four epoxide groups) epoxy compounds. The multi-epoxy reactive diluents may be low viscosity epoxies that are used to modify the viscosity and other properties, such as wetting and impregnation, of the curable composition. The viscosity of the multi-epoxy reactive diluents is typically less than about 300 cps at room temperature, although it can be higher, even substantially higher such as a solid. In some embodiments, the viscosity of the epoxy-reactive diluents is less than or equal to about 1000 cps at room temperature. In some other embodiments, an epoxy-reactive diluent can have viscosity greater than about 300 cps up to about 1000 cps, and even higher (at room temperature), particularly when the higher viscosity epoxy-reactive diluent is included in a mixture of epoxy-reactive diluents. Surprisingly, the presence of the multi-epoxy reactive diluent in the curable composition provides improved resistance to wear and to attack by solvents for the coating of the cured composition. The presence of the multi-epoxy reactive diluents in the curable composition can provide a stiffening effect to the cured composition by crosslinking with the other components, but not so much as to render the cured composition brittle.

The multi-epoxy reactive diluent has an epoxide equivalent weight (EEW) that can be from about 55 to about 400. In some embodiments the multi-epoxy reactive diluent has an EEW between about 70 to about 275. In other embodiments, the multi-epoxy reactive diluent has an EEW between about 85 to about 125. In some embodiments, the multi-epoxy reactive diluent has an EEW between and optionally including any two of the following values: 55, 59, 65, 70, 75, 80, 85, 87, 90, 95, 100, 105, 110, 120, 125, 130, 150, 180, 200, 220, 240, 260, 275, 280, 300, 320, 340, 360, 380, and 400.

In one embodiment, the multi-epoxy reactive diluent is present in the curable composition at about 0.5 to about 40 wt%, based on the combined weight of bisphenol-based epoxy resin, amine curing agent, and multi-epoxy reactive diluent. In another embodiment, the multi-epoxy reactive diluent is present in the curable composition at about 0.5 to about 40 wt%, based on the combined weight of the components in the composition. In some embodiments, the multi-epoxy reactive diluent is present in the curable composition at about 0.5 to about 20 wt%, based on the combined weight of bisphenol-based epoxy resin, amine curing agent, and multi-epoxy reactive diluent. In some embodiments, the multi-epoxy reactive diluent is present in the curable composition at about 0.5 to about 20 wt%, based on the combined weight of the components in the composition. In yet other embodiments, the multi-epoxy reactive diluent is present in the curable composition at about 0.5 to about 10 wt%, based on the combined weight of bisphenol-based epoxy resin, amine curing agent, and multi-epoxy reactive diluent. In yet other embodiments, the multi-epoxy reactive diluent is present in the curable composition at about 0.5 to about 10 wt%, based on the combined weight of the components in the composition. In some embodiments, the multi-epoxy reactive diluent is present between and optionally including any two of the following values: 0.5, 1, 2, 3, 4, 5, 6, 7, 8, 9, 10, 15, 20, 25, 30, 35, and 40 wt%. It is possible that curable compositions containing more than the maximum amount of the multi-epoxy reactive diluent may become too brittle upon curing, and in some cases even may not polymerize well.

In one embodiment, a mixture of multi-epoxy reactive diluents, i.e., a mixture of a tri-epoxy reactive diluent and tetra-epoxy reactive diluent, is included in the curable composition. In other embodiments, the curable composition includes the multi-epoxy reactive diluent that is at least one tri-epoxy reactive diluent. In other embodiments, the curable composition includes the multi-epoxy reactive diluent that is at least one tetra-epoxy reactive diluent. The multi-epoxy reactive diluents include, but are not limited to, triglycidyl ethers, and tetraglycidyl ethers. Examples of trifunctional diluents include without limitation: 1,1,1-trimethylolpropane triglycidyl ether (EEW=101), triglycidyl-p-aminophenol (TGPAP) (EEW=97), and 4-glycidyloxy-N,N-diglycidylaniline (EEW=92), which is available commercially as Araidite®MY0510 from Huntsman International LLC (Salt Lake City, Utah, U.S.A.). Examples of tetrafunctional diluents include without limitation, 4,4'-methylenebis(N,N-diglycidylaniline) (EEW=106), pentaerythritol tetraglycidyl ether (EEW=90), and N,N,N'N'tetraglycidyl-4,4'-methylene-bis-benzenamine (EEW= 109), which is commercially available as Araldite MY727 from Huntsman International LLC (Salt Lake City, Utah, U.S.A.). Commercial epoxy resins, such as those described herein (e.g., Insulcast 504), often contain significant quantities of reactive diluents (both mono-epoxy and multi-epoxy functionalities which are believed to have EEW less than 400) as constituents within the bisphenol-based epoxy resin formulation.

In the curable compositions used in the processes described herein, in some embodiments the bisphenol-based epoxy resin is present at about 40 to about 95 wt%, the amine curing agent at about 5 to about 28 wt% and the multi-epoxy reactive diluent at about 0.5 to about 40 wt%, based on the combined weight of bisphenol-based epoxy resin, amine curing agent, and multi-epoxy reactive diluent. In some embodiments the bisphenol-based epoxy resin is present at about 40 to about 95 wt%, the amine curing agent at about 5 to about 28 wt% and the multi-epoxy reactive diluent at about 0.5 to about 40 wt%, based on the combined weight of the components of the curable composition.

In one embodiment, the curable composition can optionally contain a di-functional (i.e., having two epoxide groups) epoxy diluent compound. The di-functional epoxy has an epoxide equivalent weight (EEW) that can be from about 55 to about 400. The di-functional epoxy, which may be referred to herein as a di-epoxy reactive diluent, includes but is not limited to, diglycidyl ethers. Examples of optional difunctional epoxy reactive diluents include without limitation: 1,4-butanediol diglycidyl ether (EEW=101), neopentyl glycol diglycidyl ether (EEW=108), and cyclohexane dimethanol diglycidyl ether (EEW=114). In some embodiments, the di-functional epoxy-reactive diluent is present between and optionally including any two of the following values: 0, 1, 2, 3, 4, 5, 6, 7, 8, 9, 10, 15, 20, 25, 30, 35, and 40 wt%. In some embodiments, the di-epoxy diluent can be present at less than about 30 wt%; in other embodiments at less than about 20 wt%; and some other embodiments from about 0 to about 10 wt%, based on the combined weight of the components of the composition. The optional di-functional epoxy reactive diluent may be more suited for use in the curable composition than optional mono-functional epoxy reactive diluents. The di-functional epoxy reactive diluent contains 2 epoxide groups that provide a greater potential for crosslinking of the curable composition, and thus can aid in improving the properties of the curable composition.

In another embodiment, it is contemplated that curable compositions that contain particular di-epoxy reactive diluents could exhibit an improvement to solvent resistance and wear resistance, and therefore the particular di-epoxy reactive diluent could effectively function in the curable composition as a multi-epoxy reactive diluent. These particular di-epoxy reactive diluents should have a relatively high degree of stiffness, i.e., have a resistance to twisting along the molecular backbone (compared to the optional di-epoxy reactive diluents), and may also need to be present in the curable composition at about 10 to about 45 wt%, based on the combined weight of the components in the composition. It is expected that long-chain (> 6 methylene carbons in length) di-epoxy reactive compounds are flexible and would not be able to effectively function as the multi-epoxy reactive diluent. (See Comparative Example B which demonstrated that a curable composition absent the multi-functional reactive diluent, but containing a di-functional epoxy reactive diluent at about 5 wt% had enhanced wear resistance, but not solvent resistance.) An example of a di-epoxy reactive diluent that may be capable of functioning as the multi-reactive diluent is neopentyl glycol diglycidyl ether.

Optionally, the curable composition used in the processes described herein can contain a mono-epoxy reactive diluent. Mono-epoxy reactive diluents are epoxy compounds having one epoxide group, and thus are monofunctional epoxy-reactive diluents. Examples of mono-epoxy reactive diluents include without limitation: p-tertiarybutyl phenol glycidyl ether, cresyl glycidyl ether, 2-ethylhexyl glycidyl ether, and $C_8$-$C_{14}$ glycidyl ethers. The monofunctional epoxy-reactive diluent has an epoxide equivalent weight (EEW) that can be less than about 275. In some embodiments, the EEW of the monofunctional epoxy-reactive diluent is less than about 225. In other embodiments, the EEW of the monofunctional epoxy-reactive diluent is less than about 200. The monofunctional epoxy-reactive diluent having an EEW less than about 275 can be used from about 0 to about 30 wt% (based on the combined weight of bisphenol-based epoxy resin, amine curing agent, and multi-epoxy reactive diluent) provided that the solvent resistance of the epoxy curable composition is not impaired. In some embodiments, the monofunctional epoxy-reactive diluent having an EEW less than about 275 is present between and optionally including any two of the following values: 0, 1, 2, 3, 4, 5, 6, 7, 8, 9, 10, 15, 20, 25, and 30 wt%. In some embodiments, the mono-epoxy diluent can be present at less than about 30 wt%; and in other embodiments at less than about 20 wt%, based on the combined weight of the components of the composition. In some other embodiments, the monofunctional epoxy-reactive diluent can be used from about 0 to about 10 wt%, based on the combined weight of the components of the composition.

The curable composition may also include one or more liquid compounds that aid in rendering the composition suitable to conduct the applying step of the present method. The curable composition may be dispersed or dissolved or suspended in the liquid compounds, so that the curable composition can be applied by the desired means and can form a layer of the composition on the supporting substrate. The liquid compound is not limited and can include organic compounds and aqueous compounds. The one or more liquid compounds may be a solvent, that is a substance which is capable of dissolving another substance (i.e., resin) to form a uniform mixture. The liquid compound may be a carrier,

such as the reactive diluent, that is capable of dispersing or suspending the material in the composition in solution sufficient to conduct the steps of the present method. The curable composition may include one or more liquid compounds as a solvent and/or carrier for the curable composition. In some embodiments, the liquid compound is one or more reactive diluent. In some other embodiments, the liquid compound is the one or more organic solvents. In most embodiments, the liquid solvent or solvent mixture is removed from the composition by evaporation after application of the composition to the supporting substrate, or most typically, during the curing step.

The curable composition can further include up to about 50 wt% nanoparticles, i.e., particles having at least one dimension less than about 500 nm. In an embodiment, the value of the at least one dimension is between and optionally including any two of the following values: 1, 10, 50, 75, 100, 200, 300, 400, and 500 nm. In an embodiment, the value of at least one dimension of the nanoparticle is between about 1 and about 100 nm. The nanoparticles can be present in an amount between and optionally including any two of the following values: 0, 1, 2, 3, 4, 5, 6, 7, 8, 9, 10, 11, 12, 13, 14, 15, 16, 17, 18, 19, 20. 21, 22, 23, 24, 25, 26, 27, 28, 29, 30, 32, 34, 36, 38, 40, 42, 44, 46, 48 and 50 wt% based on the combined weight of the components of the curable composition. The nanoparticles can provide hardness and modulus of the composition, which may lead to increased wear resistance and improved engravability of a cured layer of the composition. In one embodiment, the curable composition can include nanoparticles from about 0 to about 20 wt%; in other embodiments, the curable composition can include nanoparticles from about 1 to about 30 wt%; in some embodiments, the curable composition can include nanoparticles from about 5 to about 50 wt%, based on the combined weight of the components of the curable composition.

Optionally, the particles may be coated or subjected to a surface treatment with, e.g., an organic onium species to improve interaction between the nanoparticle and the resin.

Examples of suitable nanoparticles include, but are not limited to: aluminum oxides (e.g., alumina), silica (e.g., colloidal silica and fumed silica), zinc oxide, zirconium oxide, titanium oxide, magnesium oxides, tungsten oxides, tungsten carbides, silicon carbide, titanium carbide, boron nitrides, molybdenum disulfide, and clays (e.g., laponite, bentonite, montmorillonite, hectorite, kaolinite, dickite, nacrite, halloysite, saponite, nontronite, beidellite, volhonskoite, sauconite, magadite, medmonite, kenyaite, vermiculite, serpentines, attapulgite, kulkeite, alletite, sepiolite, allophane, imogolite), carbon nanotubes, carbon black, carbon filaments, graphene, graphene oxide, and mixtures thereof.

Optionally, the curable composition may include fillers as a solid lubricant to impart improved wear characteristics of the cured composition layer. Fillers include particles that have at least one dimension greater than about 500 nm, and generally between about 500 nm to about 5 micron. Examples of fillers, include but are not limited to, aluminum oxides (e.g., alumina); silica (e.g., colloidal silica and fumed silica); zinc oxide; zirconium oxide; titanium oxide; magnesium oxides; tungsten carbides; silicon carbide; titanium carbide; boron nitrides; molybdenum disulfide; graphites; poly (tetrafluoroethylene); and mixtures thereof.

Optionally, the curable composition may include resin modifiers. Resin modifiers may be used to increase crosslinking density and/or stabilize the crosslinked network, which can provide improved end-use characteristics, such as increased solvent resistance, wear resistance, and/or improve engravability of the cured layer of the composition. Resin modifiers include, but are not limited to, acrylate monoesters of alcohols and polyols; acrylate polyesters of alcohols and polyols; methacrylate monoesters of alcohols and polyols; and methacrylate polyesters of alcohols and polyols; where the alcohols and the polyols suitable include, but are not limited to, alkanols, alkylene glycols, trimethylol propane, ethoxylated trimethylol propane, pentaerythritol, and polyacrylol oligomers. A combination of monofunctional and multifunctional acrylates or methacrylates may be used. The curable composition may include resin modifiers at up to about 10 wt%, based on the combined weight of the components of the curable composition.

The curable composition optionally may include additives, such as flexibilizing components, non-reactive diluents (such as, dibutyl phthalate), surfactants, dispersants, dyes, pigments, and wetting and leveling additives for coating uniformity and appearance. Epoxy may be flexibilized as described in Epoxy Resins Chemistry and Technology, Clayton A. May editor, 2nd edition, Marcel Dekker, Inc, NY. Suitable flexibilizing components include, but are not limited to, polyamides, carboxylated polymers, fatty diamines, polyglycol diepoxides, polyurethane amines, and polyetherurethane amines. In some embodiments the flexibilizing component included in the curable composition is polyurethane amine or polyetherurethane amine, such as, Aradur® 70BD, which is available from Huntsman International LLC, (Salt Lake City, Utah, U.S.A.). The flexibilizing component may be present from about 0 to about 15 wt%, based on the combined weight of the components of the curable composition. In some embodiments, the flexibilizing component is present in an amount between and optionally including any two of the following values: 0, 1, 2, 3, 4, 5, 7, 9,11, 13, and 15 wt%, based on the combined weight of the components of the curable composition.

Examples of wetting and leveling additives, which may be referred to herein as leveling additive, for coating uniformity and appearance are acrylic polymers, poly(dimethylsiloxane), methylalkylpolysiloxane copolymers, fluoro-modified acrylates, and fluoro-modified polyacrylate copolymers. The leveling additive can be present at from 0 to about 10 wt%, based on the combined weight of the components of the curable composition. In some embodiments, the leveling additive can be present from about 0.1 to 5 wt%, based on the combined weight of the components of the curable composition. In some embodiments, the leveling additive is present in an amount between and optionally including any

two of the following values: 0, 0.1, 1, 2, 3, 4, 5, 7, 9, and 10 wt%, based on the combined weight of the components of the curable composition

A dispersant can be added in order to disperse the nanoparticles and/or fillers and/or pigments and avoid flocculation and agglomeration. Dispersants suitable for use are not limited, provided that the dispersant can uniformly distribute the nanoparticles and/or fillers in the layer, and is sufficiently compatible with the resin and other components in the curable composition to the extent that a suitable layer is produced. A wide range of dispersants are commercially available. One embodiment of suitable dispersants are the A-B dispersants generally described in "Use of A-B Block Polymers as Dispersants For Non-aqueous Coating Systems" by H. K. Jakubauskas, Journal of Coating Technology, Vol. 58; Number 736; pages 71-82. Useful A-B dispersants are disclosed in U.S. Patent Nos. 3,684,771; 3,788,996; 4,070,388; and 4,032,698. Other useful dispersants are disclosed in U.S. Patent 6,472,463. Examples of dispersants include acrylate polymers with basic, acidic and non-ionic groups that can stabilize pigment, particulate and/or filler dispersions. The dispersant can be present in an amount of about 0.1 to 10% by weight, based on the combined weight of the components in the curable composition.

The curable composition includes or consists essentially of at least the bisphenol-based epoxy resin, the amine curing agent selected from a primary or secondary amine and having an amine equivalent weight of less than or equal to 200 g/equivalent, and the multi-epoxy reactive diluent having an epoxide equivalent weight between 55 and 400. In most embodiments, the curable composition can include or can consist essentially of the bisphenol-based epoxy resin, the amine curing agent, and the multi-epoxy reactive diluent that is selected from a tri-epoxy reactive diluent, and a tetra-epoxy reactive diluent. In some embodiments, the curable composition can include or can consist essentially of the bisphenol-based epoxy resin, the amine curing agent, and the multi-epoxy reactive diluent that is selected from a di-epoxy reactive diluent having a high degree of stiffness (i.e., resistance to twisting along its molecular backbone), a tri-epoxy reactive diluent, and a tetra-epoxy reactive diluent. In some embodiments, the curable composition can include or can consist essentially of the bisphenol-based epoxy resin, the amine curing agent, the multi-epoxy reactive diluent, and the pigment and/or filler. In other embodiments, the curable composition includes or consists essentially of the bisphenol-based epoxy resin, the amine curing agent, the multi-epoxy reactive diluent, and the catalyst. In other embodiments, the curable composition can include or can consist essentially of the bisphenol-based epoxy resin, the amine curing agent, the multi-epoxy reactive diluent, and the nanoparticles. In yet other embodiments, the curable composition can include or can consist essentially of the bisphenol-based epoxy resin, the amine curing agent, the multi-epoxy reactive diluent, the difunctional epoxy reactive diluent the monofunctional epoxy reactive diluent, and the pigment and/or filler. In still other embodiments, the curable composition can include or can consist essentially of the bisphenol-based epoxy resin, the amine curing agent, an additional epoxy resin, and the multi-epoxy reactive diluent. In other embodiments, the curable composition can include or can consist essentially of the bisphenol-based epoxy resin, the amine curing agent, the multi-epoxy reactive diluent, the difunctional epoxy reactive diluent, the monofunctional epoxy reactive diluent, the fillers, the pigments, and the nanoparticles.

In one embodiment, the curable compositions include the bisphenol-based epoxy resin present at about 45 to about 95 wt%, the amine curing agent at about 5 to about 25 wt%, and the multi-epoxy reactive diluent at about 0.5 to about 30 wt%, based on the combined weight of the components of the curable composition. In some embodiments, the curable compositions include the bisphenol-based epoxy resin present at about 50 to about 90 wt%, the amine curing agent at about 5 to about 20 wt%, the multi-epoxy reactive diluent at about 0.5 to about 20 wt%, and the nanoparticles at about 1 to about 25% based on the combined weight of the components of the curable composition. In some other embodiments, the curable compositions include the bisphenol-based epoxy resin present at about 50 to about 90 wt%, the amine curing agent at about 5 to about 20 wt%, the multi-epoxy reactive diluent at about 0.5 to about 40 wt%, the monofunctional epoxy reactive diluent at about 0 to about 30 wt%, and the nanoparticles at about 1 to about 25% based on the combined weight of the components in the composition. In other embodiments, the curable compositions include the bisphenol-based epoxy resin present at about 50 to about 90 wt%, the amine curing agent at about 5 to about 20 wt%, the multi-epoxy reactive diluent at about 0.5 to 40 wt%, the catalyst at about 0 to about 10 wt%, and the nanoparticles at about 1 to about 30 wt%, based on the combined weight of the components in the composition. In other embodiments, the curable compositions include the bisphenol-based epoxy resin present at about 50 to about 90 wt%, the amine curing agent at about 5 to about 20 wt%, the multi-epoxy reactive diluent at about 0.5 to about 40 wt%, the filler at about 0 to about 20 wt%, pigments at about 0 to about 25 wt%, and the nanoparticles at about 1 to about 30 wt%, based on the combined weight of the components in the composition.

In one embodiment, the curable composition includes the epoxy resin based on bisphenol A having a molecular weight of about 310 to about 6000 g/mol; the amine curing agent is an aliphatic amine, cycloaliphatic amine, aromatic amine, or arylyl amine; and the multi-epoxy reactive diluent is selected from a di-epoxy reactive diluent, a tri-epoxy reactive diluent, or a tetra-epoxy reactive diluent, having an epoxy equivalent weight of 55 to 400.

In one embodiment, the curable composition further includes a blend of epoxy resins based on bisphenol A having a molecular weight of about 310 to about 6000 g/mol. In one embodiment, the curable composition includes the epoxy resin based on bisphenol F having a molecular weight of about 298 to about 6000 g/mol; the amine curing agent

is an aliphatic amine, cycloaliphatic amine, aromatic amine, or arylyl amine; and the multi-epoxy reactive diluent that is a tri-epoxy reactive diluent or tetra-epoxy reactive diluent. In one embodiment, the curable composition further includes a blend of epoxy resins based on bisphenol F having a molecular weight of about 298 to about 6000 g/mol. In one embodiment, the curable composition includes the bisphenol-based epoxy resin having a molecular weight of about 298 to about 6000 g/mol; the amine curing agent is triethylenetetramine, diethylenetriamine, tetraethylenepentamine, or a cycloaliphatic amine; and the multi-epoxy reactive diluent is 1,1,1-trimethylolpropane triglycidyl ether, and triglycidyl-p-aminophenol, 4,4'-methylenebis(N,N-diglycidylaniline), or pentaerythritol tetraglycidyl ether. In one embodiment, the above curable compositions further include up to about 50 wt% nanoparticles, based upon the combined weight of the components of the curable composition. In another embodiment, the above curable compositions further include up to about 10 wt% catalyst, based upon the combined weight of the components of the curable composition. In another embodiment, the above curable compositions further include up to about 40 wt% of the difunctional epoxy-reactive diluent, based upon the combined weight of the components of the curable composition. In another embodiment, the above curable compositions further include up to about 30 wt% of the monofunctional epoxy-reactive diluent, based upon the combined weight of the components of the curable composition. In still another embodiment the above curable compositions further include up to about 25 wt% of a pigment, based upon the combined weight of the components of the curable composition. In yet other embodiments, the above curable compositions further include an additional epoxy resin that is an epoxy novolac resin, where the bisphenol-based epoxy resin is present in the curable composition at least 50 wt%, based on the total of the epoxy resins.

The process of preparing a printing form includes applying the curable composition onto a supporting substrate, to form a layer of the curable composition. The composition may be applied to the printing substrate by various means well known in the art. The method of the present invention is particularly applicable to the application of the curable composition as a liquid to a supporting substrate that can be used as a printing roll or print cylinder in a rotogravure printing process. In some embodiments for application to the supporting substrate, the curable composition has a viscosity less than about 5000 cps. In other embodiments for application to the supporting substrate, the curable composition has a viscosity less than about 3000 cps. The supporting substrate, e.g., printing roll or print cylinder may be made of metal (e.g., aluminum or steel) or a polymeric material. Prior to the application of the curable composition to the supporting substrate, an exterior surface of the supporting substrate that receives the composition may be pretreated by means of a plasma or corona pretreatment to clean and/or alter the surface (i.e., lower the surface tension) of the cylinder or roll for improved film or coating wetout and bonding strengths. Additionally or alternatively, a primer solution, such as an epoxy primer solution, may be applied to the exterior surface of the supporting substrate to improve adhesion of the curable (and cured) composition to the supporting substrate. In some embodiments, the supporting substrate may be preheated to below a curing temperature prior to application of the curable composition.

The curable composition can be applied to the supporting substrate by any suitable method, including but not limited to, injection, pouring, liquid casting, jetting, immersion, spraying, vapor deposition, and coating. Examples of suitable methods of coating include spin coating, dip coating, slot coating, roller coating, extrusion coating, brush coating, ring coating, powder coating, and blade (e.g., doctor blade) coating, all as known in the art and described in, e.g., British Patent No. 1,544,748. In one embodiment, the curable composition is applied by spraying the composition onto the surface of the supporting substrate, such as the printing roll or cylinder. Such spraying can be accomplished through the use of a nozzle through techniques known in the art. In another embodiment, the curable composition is applied to the exterior surface of the supporting substrate by brush coating in a manner similar to that described in U. S. Patent 4,007,680. In most embodiments, the curable composition is applied so as to form a continuous or seamless layer on a cylindrically-shaped supporting substrate, so as to provide a continuous print surface for the printing form (after curing and engraving). The exterior surface of the supporting substrate, or the supporting substrate, can be preheated in some embodiments from about 23°C to about 40°C prior to application of the curable composition. The curable composition, as applied to the surface of the printing substrate, forms a layer that has a thickness between about 2 and about 300 mils (50.8 to 7620 μm). Optionally, the thickness of the layer of the curable composition includes any two of the following thicknesses: 2, 4, 8, 12, 16, 20, 50, 100, 150, 200, 250, and 300 mils (50.8, 102, 203, 305, 406, 508, 1270, 2540, 3810, 5080, 6350, and 7620 μm).

The process of preparing a printing form includes curing the layer at one or more temperatures in the range of room temperature to about 250°C. After the curable composition is applied to the substrate, the layer of the composition is cured so as to harden on the supporting substrate, so that the layer is capable of being engraved. Hardening of the resin composition occurs by crosslinking of polymer chains of the bisphenol-based epoxy resin brought about by the reactive components of the composition, such as the amine curing agent, multi-epoxy reactive diluent, and optional catalyst, with reactive groups in the resin. Curing can be performed at ambient temperature. Although methods of curing epoxy resins include exposure to ultraviolet radiation and gelation at room temperature, for most embodiments of the present process curing includes heating the layer of the curable composition. Curing can be accelerated by heating the layer of the curable composition at one or more temperatures in a range from above room temperature (i.e., ambient temperature) to about 250°C. The curable compositions described herein are cured thermally (i.e., by heating) in less

than about 6 hours. In some embodiments, the layer of the curable composition is cured thermally in less than 4 hours; in some embodiments, the layer of the curable composition is cured thermally in about 1 hour to about 2 hours. In yet other embodiments, the layer of the curable compositions are cured thermally in about 1 hour or less. Times and temperatures will depend on the specific curable composition and are readily determined by one skilled in the art. Curing at temperatures up to about 250°C also aids in driving out solvent from the curing resin layer, if solvent present in the curable composition. More specifically, the temperature is between and optionally including any two of the following values: 16, 30, 50, 70, 90, 110, 130, 150, 170, 190, 210, 230, and 250°C. Curing can be carried out at one temperature, or at two temperatures sequentially in that range, for example, 1 hour at 100°C and then 4 hours at 160°C. In an embodiment, the layer of the composition is cured by heating at about 100°C to 120°C for 2 hours. In another embodiment, the composition is cured by heating at about 100°C for 1 hour and then about 150°C to 160°C for 1 hour. One suitable method to determine if the layer of the curable composition is sufficiently cured is by conducting model studies of the composition based on end-use performance characteristics such as adhesion, wear resistance, and solvent resistance.

The cured layer of the curable composition (after application to the surface of the supporting substrate and curing) has a thickness that is from about 2 to about 300 mils (50.8 to 7620 μm). The thickness of the cured layer is between and optionally including any two of the following thicknesses: 2, 4, 8, 12, 16, 20, 50, 100, 150, 200, 250, and 300 mils (50.8, 102, 203, 305, 406, 508, 1270, 2540, 3810, 5080, 6350, and 7620 μm). Optionally, the cured layer can be ground and polished to desired thickness, cylindricity, and/or smoothness, prior to engraving as disclosed in U.S. Patent 5,694,852. The smoothness of the cured layer can be reported as Rz value. In most embodiments, the smoothness of the cured layer has Rz value less than about 100 microinches (2.54 μm); in some embodiments, the Rz value is less than about 80 microinches (2.03 μm); in other embodiments, the Rz value is less than about 40 microinches (1.02 μm); and in yet other embodiments, the Rz value is less than about 20 microinches (0.50 μm).

The process of preparing a printing form includes engraving at least one cell into the cured layer of the composition on the supporting substrate. After the curable composition is applied to the substrate and cured, engraving of the cured composition layer removes the hardened composition in depth to form a plurality of individual cells in the layer for carrying ink which transfers, in whole or part, during printing of the desired image. The engraving of the plurality of cells in the cured layer on the supporting substrate provides a printing form or, equivalently, an image carrier, having a printing surface that is capable of reproducing the desired image by printing onto a substrate. The engraving may be accomplished by any of various engraving methods known in the art. Examples include, but are not limited to, electromechanical engraving (e.g., with a diamond stylus) and laser engraving. These engraving methods may be part of an electronic engraving system. In one embodiment, engraving is carried out using a diamond stylus cutting tool. In another embodiment, direct laser non-contact engraving is used for the creation of the ink cells. Examples of suitable lasers include, but are not limited to, $CO_2$ lasers, YAG lasers (based on yttrium aluminum garnet crystals), and diode lasers. The present process of preparing the printing form having a cured layer of the bisphenol-based epoxy composition is particularly advantageous in that the cured layer can be engraved using conventional engraving equipment at standard or substantially standard conditions that are used to engrave copper layer for conventional gravure cylinders.

One or more pigments may be added to the curable composition in order to enhance its laser engravability. The pigment can be present in the laser engravable composition in an amount of from about 0 to about 25 wt%, and in one embodiment from about 0.5 wt% to about 20 wt%, based on the combined weight of the components of the curable composition. In some embodiments, the pigment is present in an amount between and optionally including any two of the following values: 0, 0.5, 1.5, 3, 6, 8, 10, 12, 14, 16, 18, 20, 22, and 25 wt%, based on the combined weight of the components of the curable composition. Examples of such pigments include, but are not limited to, black silicic pigments (containing carbon-encapsulated silica particles), and carbon black.

Optionally, the engraved layer can be further treated by polishing to remove burrs, and/or by applying a coating of a fluoropolymeric composition over the engraved layer (i.e., overcoat) to improve the ink releasability of the printing form.

In some embodiments, the printing form is in the shape of a cylinder or plate. In some embodiments, the supporting substrate is metal or a polymer. In most embodiments, the printing form is suited for gravure printing. Gravure printing is a method of printing in which the printing form prints from an image area, where the image area is depressed and consists of small recessed cells (or wells) to contain the ink or printing material, and the non-image area is the surface of the form. In most embodiments, the printing surface is the cured layer of the epoxy composition that is engraved to form an ink receptive cell surface suitable for gravure printing. It is also contemplated that in some embodiments the printing form may be suited for relief printing, including use as a letterpress printing form. Relief printing is a method of printing in which the printing form prints from an image area, where the image area of the printing form is raised and the non-image area is depressed. For printing forms useful for relief printing, the engraving of at least one cell creates the non-image area that would not carry ink for printing the desired image, and the surface raised above the cell is the image area that carries ink for printing the desired image. In some embodiments the printing surface is a topmost surface of raised elements of a relief surface suitable for carrying ink for relief printing.

In a further embodiment, a printing form is provided that includes a continuous print surface adjacent to a supporting substrate, wherein the continuous print surface is a layer of a cured epoxy composition prepared from a

composition that includes i) a bisphenol-based epoxy resin; ii) an amine curing agent selected from primary amines and secondary amines, the agent having an amine equivalent weight of less than or equal to 200 g/equivalent; and iii) at least one multi-epoxy reactive diluent; wherein the multi-epoxy reactive diluent is present at 0.5 to 40 wt% based on the combined weight of the components of the curable composition and has an epoxy equivalent weight of 55 to 400.

In another embodiment, a process is provided for printing with the printing form that was prepared as described above. The process for printing further includes applying an ink, typically a solvent ink, to the at least one cell that has been engraved into the cured layer of the prepared printing form, and transferring ink from the cell to a printable substrate. Suitable solvent inks include those based on organic solvents such as, without limitation, alcohols, hydrocarbons (e.g., toluene, heptane) acetates (e.g., ethyl acetate), and ketones (e.g., methyl ethyl ketone). Aqueous inks are also suitable for printing with the present printing form.

When the cured layer is not adequately solvent resistant, absorbing solvent from the solvent ink can cause the cured layer to swell excessively. Excessive swelling is detrimental to print quality and to the durability of the image carrier. The amount of swelling in terms of cured layer weight gain in the process described herein is less than about 10 wt%. In some embodiments, the amount of swelling of the cured layer is between 0 and about 5 wt%. This can be achieved in part by through the choice of amine curing agent, i.e., by using an amine curing agent characterized by an amine equivalent weight of about 20 to about 200 g/equivalent; and by including a multi-epoxy reactive diluent at up to 40 wt% in the curable composition. In addition, the structure of the bisphenol-based epoxy resin affects the amount of swell. For example, increased crosslinking can lead to reduced swell, i.e., improved solvent resistance.

## EXAMPLES

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

The meaning of abbreviations is as follows: "BPA" means bisphenol A, "BPF" means bisphenol F, "cm" means centimeter(s), "DYN" means 2,2-dimethyl-1,3-propanedioldiglycidylether, "DYT" means 1,1,1-trimethylolpropane triglycidyl ether, "EEW" means epoxide equivalent weight, "equiv" means equivalent(s), "g" means gram(s), "GMPE" means glycidyl methyl phenyl ether, "h" means hour(s), "L" means liter(s), "lpi" means lines per inch, "m" means meter(s), "mL" means milliliter(s), "nm" means nanometer(s), "oz" means ounce(s). "wt%" means weight percent(age), and "μm" means micrometer.

Unless otherwise indicated, the epoxide equivalent weight (EEW) cited for each of the epoxy materials is the value reported by the manufacturer, based upon each manufacturer's standard test method.

### Methods

### Solvent Resistance

Epoxy resin compositions were prepared and coated on a sheet support as indicated using a 10 mil (254 μm) drawdown bar to form a polymeric film (i.e., layer) on the support. The polymeric film samples were cured according to specifications or in the Example, and peeled from the support. Film fragments (50-100 mg) were weighed into jars containing 10-20 mL of specified solvent. The film fragments were immersed for one week (i.e., 7 days), then blotted dry and weighed. The wt% change is calculated as:

$$100 * [\text{weight}(7\text{day}) - \text{weight}(\text{initial})] \ / \ \text{weight}(\text{initial}).$$

The composition had good solvent resistance if, after 7 days in the solvent, the wt% change of the fragments was less than 10%.

### Engravability

Epoxy resin compositions were prepared, coated onto a cylinder, cured and engraved as indicated in the Example. A cured resin sample was deemed to have good engraveability if engraving of the sample to create cells at 170 to 200 lines per inch could be achieved with less than 15 % breakout. Engraved image resolution of 170 to 200 lines per inch corresponds to a cell width of about 115 to 140 μm and a width of a cell wall of less than 25 μm. A breakout is

defined herein as a defect in which a wall adjacent to two cells has a break in it, thereby producing a connection between the two cells. The engraved area was examined microscopically, and about 30-50 cells were examined to determine the breakout percentage.

Wear

An in-house wear test was established to mimic a typical gravure printing process. For the wear test, the (engraved) cylinder, which has a cured layer of the composition, was rotated, partially immersed in the ink tray, and was contacting a steel doctor blade once per revolution. The ink used for the test was Multiprint White ink from Del Val Ink and Color Inc. The cell area of the engraved cylinder was measured after 300,000 revolutions (unless otherwise noted) to monitor the extent of wear with a Hirox KH-7700 microscope. Wear is reported as a percent reduction in cell area. The cured layer was considered to have acceptable wear resistance if the reduction in cell area induced by the in-house tester was less than 10%.

Print Quality

This was determined for a long print run, i.e., greater than 100,000 impressions, and is reported in terms of number of impressions until the print quality (considering characteristics such as sharpness, smearing, etc.) was visually unacceptable.

Materials

Insulcast 504 Clear and Insulcast 503/504 BLK epoxy resins and Insulcure 9 and 11B curing agents were obtained from ITW Polymer Technologies (Glenview, Illinois, U.S.A.).

Insulcast 504 Clear bisphenol A epoxy resin contains alkyl glycidyl ether ($C_{12}$ - $C_{14}$) (30-60 parts by weight); and BPA diglycidyl ether resin (30-60 parts by weight).

Insulcast 503/504 BLK bisphenol A epoxy resin is a mix of a bisphenol A (BPA) diglycidyl ether resin (60-100 parts by weight); carbon black (0.1-1 part by weight); alkyl glycidyl ethers (10-30 parts by weight); and mono[($C_{12}$-$C_{13}$-alkoxy)methyl] oxirane derivatives (10-30 parts by weight).

EPON™ Resin 828 (diglycidyl ether of Bisphenol A, "DGEBPA") was obtained from Hexion Specialty Chemicals, Inc. (now Momentive Specialty Chemicals, Inc., part of Momentive Performance Materials Holdings, Inc., Columbus, Ohio, U.S.A.). Properties of this resin are EEW of 185-192 g/equiv, viscosity of 110-150 P.

EPON™ Resin 862 (diglycidyl ether of bisphenol F, "DGEBPF") was obtained from Hexion Specialty Chemicals, Inc. (now Momentive Specialty Chemicals, Inc., part of Momentive Performance Materials Holdings, Inc., Columbus, Ohio, U.S.A.). Properties of this resin are EEW of 165-173 g/equiv, viscosity of 24-45 P.

D.E.N.™ 431 which is an epoxy novolac resin was obtained from Dow Chemical Company (Midland, Michigan, USA).

Poly(bisphenol A-co-epichlorohydrin) resin (CAS No. 25036-25-3)

Bisphenol A diglycidyl ether (BPADGE) (CAS No. 1675-54-3)

Insulcure 9 curing agent is tetraethylenepentamine (CAS No. 112-57-2)

Insulcure 11 B curing agent contains (2,2'dimethyl-4,4'-methylene bis(cyclohexylamine) (60-100 wt parts by weight); and 2-ethyl-4-methyl-1 h-imidazole (1-5 wt parts by weight).

Aradur® 355 is a cycloaliphatic amine.

NanoTek® nano-sized aluminum oxide, referred to as "nanoalumina," was obtained from Alfa Aesar (catalog no.44932, Ward Hill, Massachusetts, U.S.A.). The NanoTek® nanoalumina is 99.5% $Al_2O_3$, Alfa Aesar 44932, 40-50 nm APS Powder, surface area of 32-40 $m^2$/g.

The following were obtained from Huntsman:

1,1,1-trimethylolpropane triglycidyl ether, referred to herein as "DYT" (CAS No. 30499-70-8);
2,2-dimethyl-1,3-propanediol diglycidyl ether, referred to herein as "DYN" (CAS No. 17557-23-2 );
1,4-butanedioldiglycidyl ether, referred to herein as "DYD" (CAS No. 2425-79-8);
Araldite® MY 0510 which is 4-glycidyloxy-N,N-diglycidylaniline (CAS No. 5026-74-4); and

The following were obtained from Sigma-Aldrich Corporation (St. Louis, Missouri, USA):

Glycidyl methyl phenyl ether, refered to herein as "GMPE" (CAS No. 2210-79-9);
tris(2-aminoethyl)amine (CAS No. 4097-89-6 );
tungsten (VI) oxide nanopowder having <100 nm particle size (by transmission electron microscopy); and
titanium carbide nanopowder having <200 nm particle size (by transmission electron microscopy)

Solvent A is a mixture of 25g MEK, 6.5 g butyl acetate, 19 g n-butanol, 3g propylene glycol monomethyl ether acetate, and 35 g xylene.

Example 1

This example demonstrates that a curable composition containing a bisphenol-A-based epoxy resin and a trifunctional diluent (at 4.1 wt% based on total components) can be used to prepare a coating on a printing form that exhibits all of the desired properties for a print cylinder for use in gravure printing, including excellent coatability, excellent curing and curing time, excellent solvent resistance, excellent engravability, and excellent wear resistance.

In a 16 oz (0.47 L) jar, 100 g Insulcast 503/504 BLK epoxy resin and 5 g DYT diluent (a tri-epoxy reactive diluent) were combined and placed on a roller mill to mix well. The resulting mixture was degassed under vacuum to remove air bubbles. Then 16 g Insulcure 9 curing agent was added to the mixture, which was then stirred well with a magnetic stirrer for about 15-30 minutes. The resulting mixture was degassed under vacuum to remove air bubbles. It was then coated onto a metal cylinder that had been preheated to 40°C to obtain a coating layer 7-11 mil (178-279 μm) thick. The cylinder was coated by a brush technique using a syringe and translator to deliver material to obtain desired coating thickness. The coating layer was then cured at 80-90°C for 2 h and allowed to cool to ambient temperature gradually. The composition coated and cured to form an excellent cured layer on the cylinder.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees.

Some of the above composition was also coated onto an aluminum foil sheet using a 10 mil (254 μm) drawdown bar to form a layer. The layer was cured by heating at 80-90°C for 2 hours. The solvent resistance of the composition was measured as described above. The results were as follows:
Solvent Resistance

| Solvent | %wt qain in 7 days in solvent |
|---|---|
| methyl ethyl ketone | 2% |
| Isopropanol | 0% |
| Ethyl acetate | 0% |
| Butyl acetate | 0% |
| Toluene | 0% |

Engravability: The cured layer on the cylinder had excellent engraving quality, with « 1% broken cell walls at 100% cell density.

Wear Resistance: The cured layer was tested for wear resistance according to the in-house wear test described above. The cured layer exhibited 3.6% reduction in printable cell area.

Based upon the results for the solvent resistance, engravability, and wear resistance, it is expected that the curable composition of this Example should produce excellent quality prints and have a long print run life.

Example 2

This example demonstrates that a curable composition containing a bisphenol-A-based epoxy resin and a tri-epoxy reactive diluent (at 4.0 wt%) can be used to prepare a coating on a printing form that exhibits all of the desired properties for a print cylinder for use in gravure printing, including excellent coatability, excellent curing and curing time, excellent solvent resistance, excellent engravability, and excellent wear resistance.

In a 4 oz (0.47 L) jar, 20 g Insulcast 503/504 BLK epoxy resin and 1 g Araldite® MY0510 (a tri-epoxy reactive diluent) were combined and placed on a roller mill to mix well. The resulting mixture was degassed under vacuum to remove air bubbles. Then 4 g Insulcure 9 curing agent was added to the mixture, which was then stirred well with a mechanical stirrer for about 5-10 minutes. The resulting mixture was degassed under vacuum to remove air bubbles. It was then coated onto a metal cylinder that had been preheated to 40°C to obtain a coating 7-11 mil (178-279 μm) thick. The cylinder was coated using a brush technique to deliver material to obtain the desired coating thickness (~10 mils, ~254 μm). The coating was then cured at 100°C for 2 h and allowed to cool to ambient temperature gradually. The composition coated and cured to form an excellent cured layer on the cylinder.

The cured layer of the curable composition on the cylinder was then engraved on an Ohio R-71 00 series engraver at a cell rate 3200 Hz, with horizontal screen setting 80 lines per centimeter, a screen angle of 60 degrees at

100% tone, and using a diamond stylus at a face angle of 120 degrees.

The composition was again prepared by combining Insulcast 503/504 BLK (10 g) with 0.5 g of MY 0510 in a scintillation vial and mixed well. Then 2.0 g Insulcure® 9 was added. The sample was placed on a roller mill for about 15-30 minutes to mix well. The resultant mixture was degassed, and was coated on an aluminum foil for the solvent study. The films were then cured at 100-120°C for 2 h and allowed to cool to ambient temperature gradually. The results were as follows:

Solvent Resistance

| Solvent | % wt qain in 7 days in solvent |
|---|---|
| methylethyl ketone (MEK) | 0% |
| Toluene | 0% |
| MEK / toluene / isopropanol (40:50:10) | 0% |
| MEK/ n-propyl acetate / propylene glycol monomethyl ether /butyl acetate / methyl isobutyl ketone (20:25:20:15:20) | 0% |
| n-propyl acetate / ethyl acetate (50:50) | 0.33% |

Engravability: The cured layer on the cylinder had excellent engraving quality, with < 6% broken cell walls at 100% cell density

Wear Resistance: The cured layer was tested for wear resistance according to the in-house wear test described above. The cured layer exhibited 5.5% printable area reduction.

Print Quality: The engraved cylinder was placed on a press, a Cerutti Rotogravure Press, 4 station, and used to print a substrate of coated paper (C1S 55lb, 10,000 m/roll) with a toluene-based ink (Cyan, toluene-based ink) at 1000 ft/min. Print quality was excellent, and the cylinder printed 220,000 meters (440,000 impressions).

Example 3

This example demonstrates that a curable composition containing a bisphenol-A-based epoxy resin and trifunctional diluent (at 8.0 wt%) can be used to prepare a coating on a printing form that exhibits all of the desired properties for a print cylinder for use in gravure printing, including excellent coatability, excellent curing and curing time, excellent solvent resistance, excellent engravability, and excellent wear resistance.

In a 4 oz (0.47 L) jar, 20 g Insulcast 503/504 BLK epoxy resin and 2.2 g Araldite® MY051 0 (a tri-epoxy reactive diluent) were combined and placed on a roller mill to mix well. The resulting mixture was degassed under vacuum to remove air bubbles. Then 5.4 g Insulcure 9 curing agent was added to the mixture, which was then stirred well with a mechanic stirrer for about 5-10 minutes. The resulting mixture was degassed under vacuum to remove air bubbles. It was then coated onto a metal cylinder that had been preheated to 40°C to obtain a coating 7-11 mil (178-279 μm) thick. The cylinder was coated using a brush technique to deliver material to obtain the desired coating thickness (~10 mils, ~254 μm). The coating was then cured at 100°C for 2 h and allowed to cool to ambient temperature gradually. The composition coated and cured to form an excellent cured layer on the cylinder.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees.

The composition was again prepared by combining Insulcast 503/504 BLK (10 g) with 1.1 g of Araldite®MY0510 in a scintillation vial and mixed well. Then 2.7 g Insulcure® 9 was added. The sample was placed on a roller mill for about 15-30 minutes to mix well. The resultant mixture was degassed, and was coated on aluminum foil for solvent study. The films were then cured at 100-120°C for 2 h and allowed to cool to ambient temperature gradually. The results were as follows:

Solvent Resistance

| Solvent | % wt qain in 7 days in solvent |
|---|---|
| methyl ethyl ketone (MEK) | 0% |
| Toluene | 0% |
| MEK/toluene/isopropanol (40:50:10) | 0% |

(continued)

| Solvent | % wt qain in 7 days in solvent |
|---|---|
| MEK/n-propyl acetate/propylene glycol monomethylether/butyl acetate/methyl isobutyl ketone (20:25:20:15:20) | 0.85% |
| n-propyl acetate/ethyl acetate (50:50) | 0.28% |

Engravability: The cured layer on the cylinder had excellent engraving quality, with < 6% broken cell walls at 100% cell density.

Wear Resistance: The cured layer was tested for wear resistance according to the in-house wear test described above. The cured layer exhibited 5.3% printable area reduction.

Based upon the results for the solvent resistance, engravability, and wear resistance, it is expected that the curable composition of this Example should produce excellent quality prints and have a long print run life.

Example 4

This example demonstrates that a curable composition containing low molecular weight poly(bisphenol A-co-epichlorohydrin) based epoxy resin and trifunctional diluent (at ~8 wt%) can be used to prepare a coating on a printing form that exhibits all of the desired properties for a print cylinder for use in gravure printing, including excellent coatability, excellent curing and curing time, excellent solvent resistance, excellent engravability, and excellent wear resistance.

Into a 16 oz jar was placed 80.3 g of poly(bisphenol A-co-epichlorohydrin glycidyl ether resin (Mn ~355), 8.6 g DYT, 5.0 g DYN, 5.5 g 1,4-butanedioldiglycidyl ether, 1 g glycidylnonylphenylether, and 2 g glycidyl-2-methylphenyl ether. The jar was placed on a roller mill and turned until thorough mixing was achieved.

Into a 4 oz (0.47 L) jar, was placed 20 g of the resulting mixed solution described in the previous paragraph. The mixture was degassed under vacuum to remove air bubbles. Then 4.76 g Insulcure 9 and 3.2 g of 2,4,6-tris(dimethylaminomethyl) phenol was added to the mixture, which was then stirred well with a mechanical stirrer for about 5-10 minutes. The resulting mixture was degassed under vacuum to remove air bubbles. It was then coated onto a metal cylinder that had been preheated to 50-60°C to obtain a coating 7-11 mil (178-279 μm) thick. The cylinder was coated using a brush technique to deliver material to obtain the desired coating thickness. The coating was then cured at 120°C for 30 minutes and allowed to cool to ambient temperature gradually. The composition coated and cured to form an excellent cured layer on the cylinder.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees.

To test solvent resistance 5 g of the resulting mixed solution was placed into a small vial to which was added 1.19 g of Insulcure 9 and 0.8 g of 2,4,6-tris(dimethylaminomethyl) phenol. The ingredients were mixed well and then spread onto a metal substrate. The coating was then cured for 30 minutes at 120°C for 30 minutes. The film was removed and subjected to the usual solvent testing protocol. The results were as follows:

| Solvent | % wt qain in 7 days in solvent |
|---|---|
| methyl ethyl ketone (MEK) | 0.33% |
| Toluene | 0.12% |
| Ethyl Acetate | 0.11% |
| Isopropanol | 0.24% |

Engravability: The cured layer on the cylinder had excellent engraving quality, with < 5% broken cell walls at 100% cell density.

Based upon the results for the solvent resistance and engravability, it is expected that the curable composition of this Example should produce excellent quality prints and have a long print run life.

Example 5

This example demonstrates that a curable composition containing a low molecular weight poly(bisphenol A-co-epichlorohydrin) based epoxy resin and bisphenol-A diglycidyl ether (DGEBPA) and a trifunctional diluent (at ~ 8

wt%) can be used to prepare a coating on a printing form that exhibits all of the desired properties for a print cylinder for use in gravure printing, including excellent coatability, excellent curing and curing time, excellent solvent resistance, excellent engravability, and excellent wear resistance.

Into a 4 oz (0.47 L) jar, was placed 25 g of the resulting mixed solution described in Example 4 warmed to 50°C. The mixture was degassed under vacuum to remove air bubbles. Then 1.25 g of bisphenol-A-diglycidylether was melted at 50°C and added to the mixture. After cooling to room temperature 5.8 g Insulcure 9 and 0.5 g of 2,4,6-tris (dimethylaminomethyl) phenol was added to the mixture, which was then stirred well with a mechanical stirrer for about 5-10 minutes. The resulting mixture was degassed under vacuum to remove air bubbles. It was then coated onto a metal cylinder that had been preheated to 50-60°C to obtain a coating 7-11 mil (178-279 μm) thick. The cylinder was coated using a brush technique to deliver material to obtain the desired coating thickness. The coating was then cured at 120°C for 30 minutes and allowed to cool to ambient temperature gradually. The composition coated and cured to form an excellent cured layer on the cylinder.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees.

To test solvent resistance 5 g of the resulting mixed solution was placed into a small vial to which was added 1.19 g of Insulcure 9 and 0.8 g of 2,4,6-tris(dimethylaminomethyl) phenol. The ingredients were mixed well and then spread onto a metal substrate. The coating was then cured for 30 minutes at 120°C for 30 minutes. The film was removed and subjected to the usual solvent testing protocol. The results were as follows:

| Solvent | % wt qain in 7 days in solvent |
|---|---|
| methyl ethyl ketone (MEK) | -0.3% |
| Toluene | 0.3% |
| Ethyl Acetate | -0.03% |
| Isopropanol | -0.60% |

The film of the curable composition of this Example 5 was resistant to solvent swelling, and considered as having zero change in weight after 7 days in the solvent. In this instance, it is believed that the negative values for weight percent gain in the solvent is due to a slight breaking of a piece of the film that was not captured in the re-weigh sample. The solvent resistance test on this film sample was conducted only one time.

Engravability: The cured layer on the cylinder had excellent engraving quality, with < 5% broken cell walls at 100% cell density.

Based upon the results for the solvent resistance and engravability, it is expected that the curable composition of this Example should produce excellent quality prints and have a long print run life.

Example 6

This example illustrates a DGEBPA with a mixture of difunctional and monofunctional epoxy reactive diluent and nano-silica showed good solvent resistance and good engravability.

DGEBPA epoxy (14.8 g, Epon 828, Hexion), silica (3.24 g ), and reactive diluent neopentyl glycol diglycidyl ether (2.6 g, Araldite ® DY-N available from Huntsman International LLC), and butyl glycidyl ether (1.5g) were dissolved in xylene (0.4g), butanol (0.08g) were combined in a flask. To this was added TETA (2.77g) followed by tris-dimethylaminomethyl phenol (0.5 g). The mixture was stirred at room temperature for 10 minutes. This mixture was used to coat onto Mylar® sheet using a 10 mil drawdown bar. The coated layer of the mixture was cured at 100°C for 1 hour, then 160°C for 4 hour, and tested for solvent resistance as described above. The solvent resistance was: MEK (1 %), EA 0%, Toluene (0%).

A metal cylinder was heated to 40°C and this composition was coated on the cylinder as described in Example 1. After the desired coating thickness of about 8 mil was achieved, the cylinder and the coating were heated at about 100°C for 1 hour and 160°C for 1 hour. The cylinder was then machined, polished, and electromechanically engraved. The polymer was electromechanically engraved to 175-200 lpi. The cylinder was proofed and showed solid printing at 100% engraved area.

Example 7

This example illustrates a DGEBPA with a mixture of difuncitonal and monofunctional epoxy reactive diluent

showed good solvent resistance and good engravability.

DGEBPA epoxy (20 g, Epon 828, Hexion), and reactive diluent neopentyl glycol diglycidyl ether (3.5 g, Araldite ® DY-N available from Huntsman International LLC), and butyl glycidyl ether (2 g) were combined in a flask. To this was added TETA (3.63 g) followed by tris-dimethylaminomethyl phenol (0.6 g). The mixture was stirred at room temperature for 10 minutes.

A metal cylinder was preheated and this composition was coated on the cylinder. After the desired coating thickness of about 8 mil was achieved, the cylinder and the coating were heated at about 100°C for 1 hour and 160°C for 1 hour. The cylinder was then machined, polished, and electromechanically engraved. The polymer was electromechanically engraved to 175-200 lpi. The cylinder was proofed and showed solid printing at 100% engraved area.

This same composition was used to coat onto Mylar® sheet using a 10 mil drawdown bar. The coated layer of the mixture was cured at 100°C for 1 hour, then 160°C for 4 hour, and then tested for solvent resistance per the method described above. The solvent resistance was: MEK (5%), EA (1 %), Toluene (1 %).

Example 8

This example illustrates a DGEBPA with a trifunctional diluent and showed good solvent resistance.

DGEBPA epoxy (22.5 g, Epon 828, Hexion), and reactive trifunctional diluent Araldite®MY0510 (7.5 g) were combined in a flask. To this was added Aradur® 355 (9.6 g) followed by tris-dimethylaminomethyl phenol (0.8 g). The mixture was stirred at room temperature for 10 minutes. This same composition was used to coat onto Mylar® sheet using a 10 mil drawdown bar. The coated layer of the mixture was cured at 100°C for 1 hour, then 160°C for 4 hour, and then tested for solvent resistance per the method described above. The solvent resistance was: MEK (0%), EA 0%, Toluene (1%).

Example 9

This example illustrates a DGEBPA with a difunctional diluent and showed good solvent resistance and good engravability.

DGEBPA epoxy (34 g, Epon 828, Hexion), and reactive difunctional diluent Araldite ® DY-N (6 g), xylene (1.7 g) and butanol (0.2 g) were stirred in a flask until homogeneous. 20.8 g of this mixture was then stirred with TETA (2.8 g) and tris-dimethylaminomethyl phenol (0.5 g) for 10 minutes. The mixture was stirred at room temperature for 10 minutes.

A metal cylinder was heated to 40°C and this composition was coated on the cylinder as described in Example 1. After the desired coating thickness of about 8 mil was achieved, the cylinder and the coating were heated at about 100°C for 1 hour and 160°C for 1 hour. The cylinder was then machined, polished, and electromechanically engraved. The polymer was electromechanically engraved to 175-200 lpi with < 5% cell breakout. The cylinder was proofed and showed solid printing at 100% engraved area.

This same composition was used to coat onto Mylar® sheet using a 10 mil drawdown bar. The coated layer of the mixture was cured at 100°C for 1 hour, then 160°C for 4 hour, and then tested for solvent resistance per the method described above. The solvent resistance was: MEK (5%), EA (3%), Toluene (1 %).

Example 10

This example illustrates a DGEBPA blended with epoxy novolac with a trifunctional diluent showed good solvent resistance.

DGEBPA epoxy (EPON™ 828) and epoxy novlac (D.E.N.™ 431) were dissolved as 80% wt solution in solvent A. DGEBPA solution (80wt%, 10g), epoxy novolac solution (80wt%, 3g) and reactive trifunctional diluent Araldite®MY0510 (2g) were combined in a flask. To this was added TETA (1.9g) followed by tris-dimethylaminomethyl phenol (0.3 g). The mixture was stirred at room temperature for 10 minutes. This same composition was used to coat onto Mylar® sheet using a 10 mil drawdown bar. The coated layer of the mixture was cured at 100°C for 1 hour and then tested for solvent resistance per the method described above. The solvent resistance was: MEK (1.6%), EA (1.8%), Toluene (2.8%).

Comparative Example A

This comparative example demonstrates that the absence of a multi-epoxy reactive diluent in a bisphenol-based epoxy resin formulation leads to a coating that has poor solvent resistance and lower wear resistance.

Into a scintillation vial was placed 10 g Insulcast 503/504 BLK epoxy resin and 1.4 g Insulcure 9 curing agent. The vial was then placed on a roller mill for about 15-30 minutes to mix well. The resulting mixture was degassed. It was coated onto a flat plate to obtain a coating 7-11 mil (178-279 μm) thick. The plate was coated by brush technique using

a syringe and translator to deliver material to obtain desired coating thickness. The film was then cured at 70-80°C for 2 h and allowed to cool to ambient temperature gradually.

As described above in the solvent resistance method, some of the resin composition was coated onto a Mylar® support, cured, and peeled from the support, and placed in jars with various solvents.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees. The results were as follows:

Solvent Resistance

| Solvent | %wt qain in solvent for 7 days |
|---|---|
| Methyl ethyl ketone | 20% |
| isopropanol | 1 % |
| ethyl acetate | 20% |
| butyl acetate | 8% |
| toluene | 21% |

Engravability: The cured layer on the cylinder had excellent engraving quality, with <<1 % broken cell walls at 100% cell density.

Wear Resistance: The cured layer was tested for wear resistance according to the in-house wear test described above. The cured layer exhibited 8% reduction in printable cell area.

Comparative Example B

This comparative example demonstrates that the addition of a somewhat stiffer additive, such as BPADGE, but no multi-epoxy reactive diluent, enhances wear resistance, but does not enhance solvent resistance, and exhibits poorer engravability of the coated layer of the cured composition.

Into an 8 oz (0.24 L) jar was added 20 g Insulcast 503/504 BLK resin and 1 g of bisphenol A diglycidyl ether (BPADGE). They were mixed well with a magnetic stirrer. Then 3.6 g Insulcure 9 was added and mixed well again with a magnetic stirrer and degassed under vacuum to remove air bubbles. The resulting mixture was then coated onto a metal cylinder that had been preheated to 40°C. The cylinder was coated by a brush technique using a syringe and translator to deliver material to obtain a coating thickness of 11.4 -12.5 mil (290-318 μm). It was then cured at 70-80°C for 2 h and allowed to cool to ambient temperature gradually.

As described above in the solvent resistance method, some of the resin composition was coated onto a Mylar® support, cured, and peeled from the support, and placed in jars with various solvents.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees. The results were as follows:

Solvent Resistance

| Solvent | %wt qain in solvent for 7 days |
|---|---|
| Methyl ethyl ketone | 32% |
| Isopropanol | 3.6% |
| ethyl acetate | 8.2% |
| butyl acetate | 9% |
| Toluene | 0.6% |

Engravability: The cured layer on the cylinder had moderate engraving quality, with about 25% broken cell walls at 100% cell density. The cured composition layer was brittle.

Wear Resistance: The cured layer was tested for wear resistance according to the in-house wear test described above. The cured layer exhibited 3.5% printable area reduction.

It is contemplated that the curable composition of Comparative Example B could have improved solvent resistance if the di-functional diluent was present at more than 5 wt% of the composition. It is also contemplated that a

curable composition containing another stiff difunctional epoxy reactive diluent at more than 5 wt% could function as a multi-reactive diluent.

Comparative Example C

This comparative example demonstrates that an attempt to increase crosslink density (to improve wear resistance and solvent resistance) by employing a trifunctional amine curing agent, rather than a multi-epoxy reactive diluent, did not lead to better solvent resistance, but lead to poor coatability.

Into a 4 oz (0.12 L) jar was combined 10 g of Insulcast 503/504 BLK resin and 1.0 g tris(2-aminoethyl)amine. The jar was then placed on a roller mill to mix well for about 15-30 minutes. The resultant mixture was degassed under vacuum to remove air bubbles. It was coated onto a flat plate by a brush technique using a syringe and translator to deliver material to obtain a coating 7-11 mil (178-279 μm) thick. The film was then cured at 100°C for 2 h and allowed to cool to ambient temperature gradually.

As described above in the solvent resistance method, some of the resin composition was coated onto a Mylar® support, cured, and peeled from the support, and placed in jars with various solvents. The results were as follows:
Solvent Resistance

| Solvent | %wt qain in solvent for 7 days |
|---|---|
| Methyl ethyl ketone | 10.6% |
| Isopropanol | 0% |
| ethyl acetate | 16.3% |
| butyl acetate | 0.88% |
| Toluene | 14.4% |

Engravability: The coating surface turned a greyish color upon curing, indicating some phase separation and/or crystallization had occured. This made the coating unacceptable for engraving.

Comparative Example D

This comparative example demonstrates that a curable composition containing two different epoxy resins and a nanofiller, but no multi-epoxy reactive diluent, can produce excellent engravability and wear resistance, but solvent resistance is poor.

In an 8 oz (0.24 L) jar, 1.43 g of tungsten (VI) oxide nanopowder (<100 nm) was pre-dispersed in 8.57 g Insulcast 504 Clear resin using a handheld homogenizer for 5 minutes then placed on a roller mill for 2 weeks. The resulting suspension was then combined with 10 g Insulcast 503/504 BLK resin in a 4 oz (0.12 L) jar and placed on roller mill for 1 h. The resulting mixture was degassed under vacuum to remove air bubbles, and 2.8 g of Insulcure 9 curing agent was added. The resulting mixture was stirred well on a magnetic stirrer for about 15-30 minutes and degassed under vacuum. The resulting mixture was then coated onto a metal cylinder that had been preheated to 40°C. The cylinder was coated by a brush technique using double syringe and translator to deliver material to obtain a coating thickness of 11.4-12.5 mil (290-318 μm). The metal syringe was cooled with a bag of ice to prevent polymerization in the syringe due to exotherm. The coating was then cured at 80-90°C for 2 h and allowed to cool to ambient temperature gradually.

As described above in the solvent resistance method, some of the resin composition was coated onto a Mylar® support, cured, and peeled from the support, and placed in jars with various solvents.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees. The results were as follows:
Solvent Resistance

| Solvent | %wt qain in solvent for 7 days |
|---|---|
| methyl ethyl ketone | 21% |
| Isopropanol | 10.3% |
| ethyl acetate | 8% |

(continued)

| Solvent | %wt qain in solvent for 7 days |
|---|---|
| butyl acetate | 6.4% |
| Toluene | 5.7% |

Engravability: The cured layer on the cylinder had excellent engraving quality, with <<1 % broken cell walls at 100% cell density.

Wear Resistance: The cured layer was tested for wear resistance according to the in-house wear test described above. The cured layer exhibited 4% reduction in printable cell area.

Print Quality: The engraved cylinder was place on a press, a Cerutti Rotogravure Press, 4 station, and used to print a substrate of coated paper (C1S 55lb, 10,000m/roll) with a toluene-based ink (Cyan, toluene-based ink) at 1000 ft/min. Print quality became poor after ~10,000 m (~20,000 revolutions) because of poor solvent resistance.

Comparative Example E

This comparative example demonstrates that a formulation containing a clear bisphenol-based epoxy resin and no multi-epoxy reactive diluent produces a coating with poor solvent resistance.

Into a scintillation vial was added 10 g Insulcast 504 Clear resin and 1.4 g Insulcure 9 curing agent. The vial was then placed on a roller mill for about 15-30 minutes to mix well. The resulting mixture was degassed. It was coated on a flat plate using a doctor blade to prepare a draw down film 7-11 mil (178-279 μm) thick for testing solvent resistance. The film was then cured at 70-80°C for 2 h and allowed to cool to ambient temperature gradually.

As described above in the solvent resistance method, some of the resin composition was coated onto a Mylar® support, cured, and peeled from the support, and placed in jars with various solvents. The results were as follows: Solvent Resistance

| Solvent | %wt qain in solvent for 7 days |
|---|---|
| methyl ethyl ketone | 22% |
| Isopropanol | 10% |
| ethyl acetate | 25% |
| butyl acetate | 19% |
| Toluene | 26% |

Comparative Example F

This comparative example demonstrates that a formulation containing a clear bisphenol-based epoxy resin and a curing agent that produces a harder coating, with no multi-epoxy reactive diluent, results in a brittle cured coating having poor engravability.

In an 8 oz (0.24 L) jar was added 40 g Insulcast 504 Clear resin and 7.2 Insulcure11B. The resulting mixture was mixed well with a magnetic stirrer. It was then degassed under vacuum for 1.5 h to remove air bubbles. The resulting mixture was coated onto a cylinder that had been preheated to ~40°C by a brush technique using a syringe pump and translator to deliver material to obtain a coating thickness of ~10 mils (~254 μm). The coating was cured at 80°C for 3.5 h and cooled gradually.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees. The results were as follows:

Engravability: The cured layer on the cylinder had poor engraving quality with >75% broken cell walls at 100% cell density..

Comparative Example G

This comparative example demonstrates that a curable composition containing a bisphenol-based clear epoxy

(which contains more than 30 wt% of mono-epoxy diluents) that was modified to increase hardness with 2,2-dimethyl-1 ,3-propanedioldiglycidylether (DYN), glycidyl methyl phenyl ether (GMPE), and titanium carbide (TiC) nanopowder, but not including a multi-epoxy reactive diluent, shows poor coatability, very poor solvent resistance, and produces broken cells during the engraving process.

In an 8 oz jar (0.24 L), 0.6g TiC nanopowder (<200nm) was pre-dispersed in 3.4 g glycidyl 2-methyl phenyl ether (GMPE) using a handheld homogenizer for 5 minutes. The mixture was then placed on a roller mill for 2 weeks. The resulting suspension was then combined with 24 g Insulcast 504 Clear resin and 1.33 g DYN and placed on a roller mill and degassed under vacuum to remove air bubbles. Insulcure 9 (5.4g) was then added 15-30 minutes before coating and mixed well using a magnetic stirrer and the resulting mixture was degassed. The degassed mixture was coated onto a metal cylinder that had been preheated to 29°C. The cylinder was coated by a brush technique using a syringe and translator to deliver material to obtain a coating ~8 mil (~203 μm) thick. the coating was then cured at 80-90°C for 2 h and allowed to cool to ambient temperature gradually. The coating quality was poor since the layer of the composition contained a number of visible bubbles.

As described above in the solvent resistance method, some of the resin composition was coated onto a Mylar® support, cured, and peeled from the support, and placed in jars with various solvents.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees. The results were as follows:

Solvent Resistance

| Solvent | %wt qain in 7 days in solvent |
|---|---|
| methyl ethyl ketone | 28.7% |
| Isopropanol | 1.89% |
| ethyl acetate | 21.6% |
| butyl acetate | 8.2% |
| Toluene | 26.7% |

Engravability: The cured layer on the cylinder had good engraving quality with <5% broken cell walls at 100% cell density.

Table 1 summarizes the results of the Example and Comparative Examples. "Yes" or "No" indicates whether the property requirement was or was not met.

Table 1

| Example | Coating | Cure Conditions (Time & Temp) | Solvent Resistance (<10% swell after 7 days exposure) | Engravability on cylinder (175-200 lpi with <15% breakout) | Wear Resistance (<10% by in-house tester) | Print Quality in long run (> 100,000 cycles) |
|---|---|---|---|---|---|---|
| Example 1 | Yes | Yes | Yes | Yes | Yes | nd |
| Example 2 | Yes | Yes | Yes | Yes | Yes | Yes |
| Example 3 | Yes | Yes | Yes | Yes | Yes | nd |
| Example 4 | Yes | Yes | Yes | Yes | nd | nd |
| Example 5 | Yes | Yes | Yes | Yes | nd | nd |
| Example 6 | Yes | Yes | Yes | Yes | nd | nd |
| Example 7 | Yes | Yes | Yes | Yes | nd | nd |
| Example 8 | Yes | Yes | Yes | nd | nd | nd |
| Example 9 | Yes | Yes | Yes | Yes | nd | nd |
| Example 10 | Yes | Yes | Yes | nd | nd | nd |
| Comp Ex A | Yes | Yes | No | Yes | Yes | nd |

(continued)

| Example | Coating | Cure Conditions (Time & Temp) | Solvent Resistance (<10% swell after 7 days exposure) | Engravability on cylinder (175-200 lpi with <15% breakout) | Wear Resistance (<10% by in-house tester) | Print Quality in long run (> 100,000 cycles) |
|---|---|---|---|---|---|---|
| Comp Ex B | Yes | Yes | No | No | Yes | nd |
| Comp Ex C | No (gray, mottled surface) | Yes | No | ns | ns | nd |
| Comp Ex D | Yes | Yes | No | Yes | Yes | No |
| Comp Ex E | Yes | Yes | No | nd | nd | nd |
| Comp Ex F | Yes | Yes | nd | No | nd | nd |
| Comp Ex G | No (bubbles) | Yes | No | Yes | nd | nd |

nd: Not determined
ns: Sample not suitable for test

Preferred embodiments:

1. A process for preparing a printing form comprising:

a) providing a curable composition comprising

i) a bisphenol-based epoxy resin;

ii) an amine curing agent selected from primary amines and secondary amines, the agent having an amine equivalent weight of less than or equal to 200 g/equivalent; and

iii) at least one multi-epoxy reactive diluent;

wherein the multi-epoxy reactive diluent has an epoxide equivalent weight between 55 and 400 and is present at 0.5 to 40 wt% based on the combined weight of i), ii), and iii);

b) applying the curable composition onto a supporting substrate, thereby forming a layer;

c) curing the layer at one or more temperatures in a range of room temperature to 250°C; and

d) engraving at least one cell into the layer resulting from step c).

2. The process of Embodiment 1 wherein curing of the layer occurs at room temperature.

3. The process of Embodiment 1 wherein curing of the layer comprises heating the layer to one temperature in the range, or heating the layer to a first temperature in the range and to a second temperature in the range.

4. The process of Embodiment 1 wherein the applying step is selected from spin coating, dip coating, slot coating, roller coating, extrusion coating, brush coating, ring coating, powder coating, or doctor blade coating.

5. The process of Embodiment 1 further comprising prior to the applying step, preheating the supporting substrate to a temperature from room temperature to 40°C.

6. The process of Embodiment 1 further comprising after the curing step, grinding the layer to have a thickness from 50.8 to 7620 $\mu$m.

7. The process of Embodiment 1 wherein engraving is selected from electromechanical engraving or laser engraving.

8. The process of Embodiment 1 further comprising after the engraving step conducting an additional step selected from polishing an exterior surface of the layer, or applying a coating of a fluoropolymeric composition on the layer.

9. The process of Embodiment 1 wherein the multi-epoxy reactive diluent has an epoxide equivalent weight between 85 and 125.

10. The process of Embodiment 1 wherein the multi-epoxy reactive diluent has an epoxide equivalent weight between 70 and 275.

11. The process of Embodiment 1 wherein the multi-epoxy reactive diluent is selected from the group consisting of triglycidyl ethers, and tetraglycidyl ethers.

12. The process of Embodiment 1 wherein the multi-epoxy reactive diluent is selected from 1,1,1-trimethylolpropane triglycidyl ether; triglycidyl-p-aminophenol; 4-glycidyloxy-N,N-diglycidylaniline; 4,4'-methylenebis(N,N-diglycidylaniline); pentaerythritol tetraglycidyl ether, N,N,N'N'tetraglycidyl-4,4'-methylene-bis-benzenamine, neopentyl glycol diglycidyl ether, and combinations thereof.

13. The process of Embodiment 1 wherein the curable composition further comprises a mono-epoxy reactive diluent at up to 30 wt% based on the combined weight of the components of the curable composition.

14. The process of Embodiment 1 wherein the curable composition further comprises a mono-epoxy reactive diluent that is selected from p-tertiarybutyl phenol glycidyl ether, cresyl glycidyl ether, 2-ethylhexyl glycidyl ether, or $C_8$-$C_{14}$ glycidyl ethers.

15. The process of Embodiment 1 wherein the curable composition further comprises a di-epoxy reactive diluent at upto 40 wt%, based on the combined weight of the components of the curable composition.

16. The process of Embodiment 1 wherein the curable composition further comprises a di-epoxy reactive diluent that is selected from 1,4-butanediol diglycidyl ether; neopentyl glycol diglycidyl ether; and cyclohexane dimethanol diglycidyl ether.

17. The process of Embodiment 1 wherein the amine curing agent is selected from the group consisting of: triethylenetetramine, diethylenetriamine, tetraethylenepentamine; tris-2-aminoethylamine; isophorone diamine, 1,2-diaminocyclohexane, bis(4-aminocyclohexyl)methane; cycloaliphatic amines; phenylenediamines, 4,4'-diaminodiphenylmethane, 4,4'-diaminodiphenyl sulfone, diethyltoluenediamine; m-xylylene diamine, 1,3-bis(aminomethyl cyclohexane); and combinations of these.

18. The process of Embodiment 1 wherein the bisphenol-based epoxy resin is present at 40 to 95 wt%, the amine curing agent at 5 to 28 wt%, and the multi-epoxy reactive diluent at 0.5 to 20 wt%, based on the combined weight of the components of the curable composition.

19. The process of Embodiment 1 wherein the bisphenol-based epoxy resin is selected from the group consisting of: an epoxy resin based on bisphenol A having a molecular weight from 298 to 6000 g/mol; an epoxy resin based on bisphenol F having a molecular weight from 310 to 6000 g/mol; and combinations thereof.

20. The process of Embodiment 1 wherein the bisphenol-based epoxy resin is selected from bisphenol A diglycidyl ether and its oligomers,

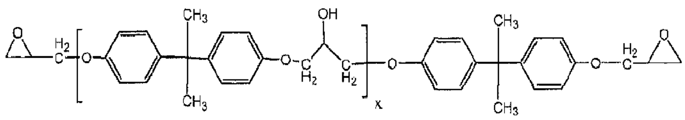

and bisphenol F diglycidyl ether and its oligomers

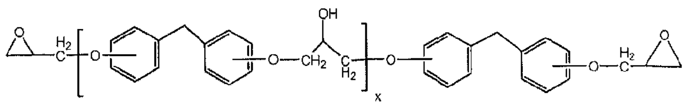

where x can be 0 to about 16.

21. The process of Embodiment 20 wherein the curable composition further comprises at least one epoxy resin that is not based on bisphenol A or bisphenol F.

22. The process of Embodiment 20 wherein the curable composition further comprises at least one epoxy resin that is not based on bisphenol A or bisphenol F and is selected from epoxy novolac resins, and epoxy cresol novolac resins.

23. The process of Embodiment 1 wherein the curable composition further comprises up to 30 wt% nanoparticles having at least one dimension less than 500 nm.

24. The process of Embodiment 23 wherein the nanoparticles comprise at least one member of the group consisting of: aluminum oxides, colloidal silica, fumed silica, zinc oxide, zirconium oxide, titanium oxide, tungsten oxides, magnesium oxides, titanium carbides, tungsten carbides, silicon carbides, boron nitrides, clay, carbon nanotubes, carbon black, carbon filaments, graphene, graphene oxide, and mixtures thereof.

25. The process of Embodiment 24 wherein the clay is at least one member of the group consisting of: laponite, bentonite, montmorillonite, hectorite, kaolinite, dickite, nacrite, halloysite, saponite, nontronite, beidellite, volhonskoite, sauconite, magadite, medmonite, kenyaite, vermiculite, serpentines, attapulgite, kulkeite, alletite, sepiolite, allophane, imogolite, and mixtures thereof.

26. The process of Embodiment 1 wherein the supporting substrate is in the form of a cylinder or plate.

27. The process of Embodiment 1 wherein the bisphenol-based epoxy resin is bisphenol A diglycidyl ether or oligomers of bisphenol A diglycidyl ether and has a molecular weight from 298 to 6000 g/mol; the amine curing agent is an aliphatic amine; and the multi-epoxy reactive diluent is a triglycidyl ether or a tetraglycidyl ether.

28. The process of Embodiment 27 wherein the curable composition further comprises up to 50 wt% nanoparticles, based on the combined weight of the components of the curable composition.

29. The process of Embodiment 27 wherein the curable composition further comprises up to 25 wt% pigments, based on the combined weight of the components of the curable composition, and is selected from black silicic pigments and carbon black.

30. The process of Embodiment 27 wherein the curable composition further comprises one or more fillers selected from aluminum oxides; silica; zinc oxide; zirconium oxide; titanium oxide; magnesium oxides; tungsten carbides; silicon carbide; titanium carbide; boron nitrides; molybdenum disulfide; graphites; poly(tetrafluoroethylene); and mixtures thereof.

31. The process of Embodiment 1 wherein the bisphenol-based epoxy resin is bisphenol A diglycidyl ether or oligomers of bisphenol A diglycidyl ether and has a molecular weight from 298 to 6000 g/mol; the amine curing agent is tetraethylenepentamine; and the multi-epoxy reactive diluent is 1,1,1-trimethylolpropane triglycidyl ether.

32. The process of Embodiment 1 wherein the bisphenol-based epoxy resin is bisphenol A diglycidyl ether or oligomers of bisphenol A diglycidyl ether and has a molecular weight from 298 to 6000 g/mol; the amine curing agent is tetraethylenepentamine; and the multi-epoxy reactive diluent is 4-glycidyloxy-N,N-diglycidylaniline.

33. The process of Embodiment 1 wherein the bisphenol-based epoxy resin is bisphenol A diglycidyl ether or oligomers of bisphenol A diglycidyl ether and has a molecular weight from 298 to 6000 g/mol; the amine curing agent is tetraethylenepentamine; and the multi-epoxy reactive diluent is pentaerythritol tetraglycidyl ether.

34. A process for printing with a printing form comprising:

a) preparing the printing form having at least one engraved cell in a cured layer of the curable composition according to the process of Embodiment 1;
b) applying a solvent ink to the at least one cell; and
c) transferring ink from the cell to a printable substrate,
wherein the cured layer swells ≤ 10% based on weight of the layer.

35. A printing form comprising a continuous print surface adjacent a supporting substrate, wherein the continuous print surface is a cured epoxy composition prepared from a curable composition comprising:

i) a bisphenol-based epoxy resin;

ii) an amine curing agent selected from primary amines and secondary amines, the agent having an amine equivalent weight of less than or equal to 200 g/equivalent; and

iii) a multi-epoxy reactive diluent;

wherein the multi-epoxy reactive diluent is present at 0.5 to 40 wt% based on the combined weight of the components of the curable composition, and has an epoxide equivalent weight between 55 and 400.

36. The printing form of Embodiment 34 wherein the bisphenol-based epoxy resin is bisphenol A diglycidyl ether or oligomers of bisphenol A diglycidyl ether that has a molecular weight from 298 to 6000 g/mol; the amine curing agent is an aliphatic amine; and the multi-epoxy reactive diluent is a triglycidyl ether or a tetraglycidyl ether.

37. The printing form of Embodiment 34 wherein the curable composition further comprises up to 30 wt% nanoparticles, based on the combined weight of the components of the curable composition.

38. The printing form of Embodiment 34 wherein the curable composition further comprises an other epoxy resin selected from epoxy cresol novolac resins or an epoxy novolac resins, and the bisphenol-based epoxy resin is at least 50 wt%, based on the combined weight of the bisphenol-based epoxy resin and the other epoxy resin.

39. The printing form of Embodiment 34 wherein the form is in the shape of a cylinder or plate.

40. The printing form of Embodiment 34 wherein the substrate is metal or a polymer.

41. The printing form of Embodiment 34 wherein the curable composition further comprises up to 10 wt% catalyst, based on the combined weight of the components of the curable composition.

42. The printing form of Embodiment 34 wherein the curable composition comprises the bisphenol-based epoxy resin from 40 to 95 wt%, the amine curing agent from 5 to 28 wt%, the multi-epoxy reactive diluent at 0.5 to 40 wt%, a second epoxy resin from 0 to 40 wt%, a difunctional epoxy reactive diluent from 0 to 40 wt%, a monofunctional epoxy reactive diluent from 0 to 30 wt%, a catalyst from 0 to 10 wt%, nanoparticles from 0 to 50 wt%, a resin modifier from 0 to 10 wt%, a flexibilizing component from 0 to 15 wt%, a pigment from 0 to 25 wt%, and a dispersant from 0 to 10 wt%, based on the combined weight of the components present in the curable composition.

## Claims

**1.** A process for preparing a printing form comprising:

a) providing a curable composition comprising

i) a bisphenol-based epoxy resin;
ii) an amine curing agent selected from primary amines and secondary amines, the agent having an amine equivalent weight of less than or equal to 200 g/equivalent; and
iii) at least one multi-epoxy reactive diluent;

wherein the multi-epoxy reactive diluent has an epoxide equivalent weight between 55 and 400 and is present at 0.5 to 40 wt% based on the combined weight of i), ii), and iii);

b) applying the curable composition onto a supporting substrate, thereby forming a layer;
c) curing the layer at one or more temperatures in a range of room temperature to 250°C; and
d) engraving at least one cell into the layer resulting from step c).

**2.** The process of Claim 1 wherein the multi-epoxy reactive diluent has an epoxide equivalent weight between 70 and 275.

**3.** The process of Claim 1 wherein the multi-epoxy reactive diluent is selected from the group consisting of triglycidyl ethers, and tetraglycidyl ethers.

**4.** The process of Claim 1 wherein the curable composition further comprises a mono-epoxy reactive diluent at up to 30 wt% based on the combined weight of the components of the curable composition.

**5.** The process of Claim 1 wherein the curable composition further comprises a di-epoxy reactive diluent at upto 40 wt%, based on the combined weight of the components of the curable composition.

**6.** The process of Claim 1 wherein the bisphenol-based epoxy resin is present at 40 to 95 wt%, the amine curing agent at 5 to 28 wt%, and the multi-epoxy reactive diluent at 0.5 to 20 wt%, based on the combined weight of the components of the curable composition.

**7.** The process of Claim 1 wherein the bisphenol-based epoxy resin is selected from the group consisting of: an epoxy resin based on bisphenol A having a molecular weight from 298 to 6000 g/mol; an epoxy resin based on bisphenol F having a molecular weight from 310 to 6000 g/mol; and combinations thereof.

**8.** The process of Claim 1 wherein the bisphenol-based epoxy resin is selected from bisphenol A diglycidyl ether and its oligomers,

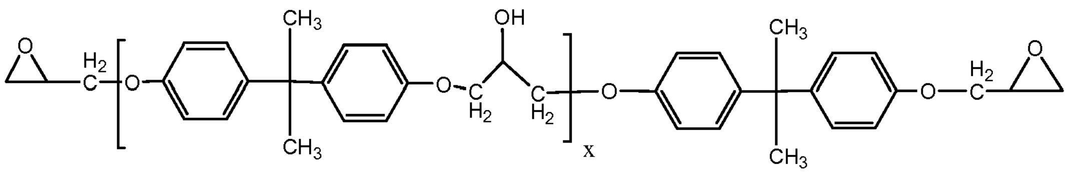

and bisphenol F diglycidyl ether and its oligomers

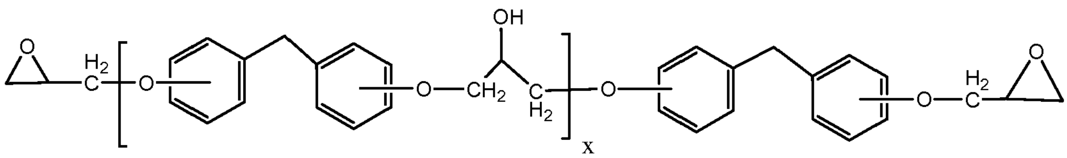

where x can be 0 to about 16.

**9.** The process of Claim 8 wherein the curable composition further comprises at least one epoxy resin that is not based on bisphenol A or bisphenol F and is selected from epoxy novolac resins, and epoxy cresol novolac resins.

**10.** The process of Claim 1 wherein the bisphenol-based epoxy resin is bisphenol A diglycidyl ether or oligomers of bisphenol A diglycidyl ether and has a molecular weight from 298 to 6000 g/mol; the amine curing agent is an aliphatic amine; and the multi-epoxy reactive diluent is a triglycidyl ether or a tetraglycidyl ether.

**11.** The process of Claim 10 wherein the curable composition further comprises up to 50 wt% nanoparticles, based on the combined weight of the components of the curable composition.

**12.** A process for printing with a printing form comprising:

a) preparing the printing form having at least one engraved cell in a cured layer of the curable composition

according to the process of Claim 1;
b) applying a solvent ink to the at least one cell; and
c) transferring ink from the cell to a printable substrate,
wherein the cured layer swells ≤ 10% based on weight of the layer.

**13.** A printing form comprising a continuous print surface adjacent a supporting substrate, wherein the continuous print surface is a cured epoxy composition prepared from a curable composition comprising:

i) a bisphenol-based epoxy resin;
ii) an amine curing agent selected from primary amines and secondary amines, the agent having an amine equivalent weight of less than or equal to 200 g/equivalent; and
iii) a multi-epoxy reactive diluent;

wherein the multi-epoxy reactive diluent is present at 0.5 to 40 wt% based on the combined weight of the components of the curable composition, and has an epoxide equivalent weight between 55 and 400.

**14.** The printing form of Claim 13 wherein the bisphenol-based epoxy resin is bisphenol A diglycidyl ether or oligomers of bisphenol A diglycidyl ether that has a molecular weight from 298 to 6000 g/mol; the amine curing agent is an aliphatic amine; and the multi-epoxy reactive diluent is a triglycidyl ether or a tetraglycidyl ether.

**15.** The printing form of Claim 13 wherein the curable composition further comprises up to 50 wt% nanoparticles, based on the combined weight of the components of the curable composition.

**16.** The printing form of Claim 13 wherein the curable composition further comprises up to 10 wt% catalyst, based on the combined weight of the components of the curable composition.

**17.** The printing form of Claim 13 wherein the curable composition comprises the bisphenol-based epoxy resin from 40 to 95 wt%, the amine curing agent from 5 to 28 wt%, the multi-epoxy reactive diluent at 0.5 to 40 wt%, a second epoxy resin from 0 to 40 wt%, a difunctional epoxy reactive diluent from 0 to 40 wt%, a monofunctional epoxy reactive diluent from 0 to 30 wt%, a catalyst from 0 to 10 wt%, nanoparticles from 0 to 50 wt%, a resin modifier from 0 to 10 wt%, a flexibilizing component from 0 to 15 wt%, a pigment from 0 to 25 wt%, and a dispersant from 0 to 10 wt%, based on the combined weight of the components present in the curable composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5694852 A, Bressler
- US 20040221756 A, Campbell and Belser
- GB 2071574 A
- US 3684771 A
- US 3788996 A
- US 4070388 A
- US 4032698 A
- US 6472463 B
- GB 1544748 A
- US 4007680 A


### Non-patent literature cited in the description


- Epoxy Resins Chemistry and Technology. Marcel Dekker
- Epoxy Resins. **HA. Q. PHAM ; MAURICE J. MARKS.** Encyclopedia of Polymer Science and Technology. John Wiley & Sons, 2004, 678-804
- Epoxy Resins Chemistry and Technology. Marcel Dekker, Inc
- **H. K. JAKUBAUSKAS.** Use of A-B Block Polymers as Dispersants For Non-aqueous Coating Systems. *Journal of Coating Technology,* vol. 58 (736), 71-82